# EUROPÄISCHE PATENTANMELDUNG

(11) **EP 4 721 541 A1**
(43) Veröffentlichungstag der Anmeldung: **08.04.2026**
(21) Anmeldenummer: 25200102.9
(22) Anmeldetag: 04.09.2025
(51) Int. Cl.: A01B 63/22, A01B 73/04

(54) **LANDWIRTSCHAFTLICHE ARBEITSMASCHINE UND LANDWIRTSCHAFTLICHER MASCHINENVERBUND**

(30) Priorität: 27.09.2024 DE 102024128069
(71) Anmelder: Horsch Maschinen GmbH, 92421 Schwandorf (DE)
(72) Erfinder: Laumer, Maximilian, 92421 Schwandorf (DE); Horsch, Philipp, 92421 Schwandorf (DE)
(74) Vertreter: v. Bezold & Partner Patentanwälte - PartG mbB

(57) **Zusammenfassung**

Die Erfindung betrifft eine landwirtschaftliche Arbeitsmaschine (1) zur Bodenbearbeitung einer landwirtschaftlichen Fläche (F, B) und/oder zur Ausbringung von landwirtschaftlichem Verteilgut auf der landwirtschaftlichen Fläche (F, B), wobei die Arbeitsmaschine (1) einen Trägerrahmen (2) umfasst, mit welchem eine Bodenbearbeitungs- und/oder Ausbringeinrichtung (3) gekoppelt ist. Die Erfindung zeichnet sich aus durch eine Stützradeinrichtung (4), welche in einer Transportstellung (TS) und in einer Betriebsstellung (BS) der Arbeitsmaschine (1), in einer Fahrtrichtung (FR) und quer zu der Fahrtrichtung (FR), in einem mittleren Bereich (5) der Arbeitsmaschine (1) angeordnet ist.

## Beschreibung

Die Erfindung betrifft eine landwirtschaftliche Arbeitsmaschine zur Bodenbearbeitung einer landwirtschaftlichen Fläche und/oder zur Ausbringung von landwirtschaftlichem Verteilgut auf der landwirtschaftlichen Fläche. Darüber hinaus betrifft die Erfindung einen landwirtschaftlichen Maschinenverbund mit einer Arbeitsmaschine.

Aus dem Stand der Technik sind Arbeitsgeräte bekannt, bei welchen bei Entwicklung und Bau ackerbauliche und rechtliche Aspekte, beispielsweise für den Straßentransport, berücksichtigt werden müssen. Dies können beispielsweise bei der Feldarbeit auf einer Ackerfläche die Bodenschonung der Ackerfläche, eine gleichmäßige Verteilung von Verteilgut, und/oder eine möglichst gleichmäßige Gewichtsverteilung auf vorhandene Bodenbearbeitungs- und/oder Saatwerkzeuge sowie eine gleichmäßige Bodenbearbeitung sein. Hinsichtlich des Straßentransport muss die Gewichtsverteilung so ausgelegt sein, dass Stützlasten und Achslasten den gesetzlich vorgeschriebenen maximalen Werten entsprechen und nicht überschreiten. Gerade Maschinen mit großen Arbeitsbreiten aus dem Stand der Technik sind aufwändig und komplex konstruiert, platzintensiv und auch gewichtsintensiv, da entsprechende Mechaniken, Hydraulik und dergleichen vorgesehen werden müssen.

Aufgabe der Erfindung ist es somit, die beschriebenen Nachteile des Standes der Technik zu beseitigen. Insbesondere soll eine Arbeitsmaschine und ein Maschinenverbund mit einer einfachen, kostengünstigen und vor allem platzsparenden Ausführung bereitgestellt werden, um bei Straßenfahrt als auch Feldarbeit eine gewünschte Bearbeitung des Feldes und/oder sichere Straßenfahrt zu erreichen.

Die Aufgabe kann gelöst werden durch eine landwirtschaftliche Arbeitsmaschine mit den Merkmalen eines unabhängigen Anspruchs. Ebenso gelöst werden kann die Aufgabe durch einen landwirtschaftlichen Maschinenverbund nach einem unabhängigen Anspruch. Vorteilhafte Ausführungsformen und Weiterbildungen der Erfindung sind in den Ansprüchen und der folgenden Beschreibung unter teilweiser Bezugnahme auf die Figuren offenbart.

Ein Aspekt der Erfindung kann sich auf eine landwirtschaftliche Arbeitsmaschine zur Bodenbearbeitung einer landwirtschaftlichen Fläche und/oder zur Ausbringung von landwirtschaftlichem Verteilgut auf der landwirtschaftlichen Fläche beziehen. Bevorzugt umfasst die Arbeitsmaschine einen Trägerrahmen. Bevorzugt ist eine Bodenbearbeitungs- und/oder Ausbringeinrichtung mit dem Trägerrahmen gekoppelt. Bevorzugt weist die Bodenbearbeitungs- und/oder Ausbringeinrichtung zumindest eine Bodenbearbeitungseinheit und/oder zumindest eine Ausbringeinheit auf. Bevorzugt weist die Bodenbearbeitungs- und/oder Ausbringeinrichtung zumindest eine Bodenbearbeitungseinheit und zumindest eine Ausbringeinheit auf. Das heißt, dass an dem Trägerrahmen die Bodenbearbeitungs- und/oder Ausbringeinrichtung befestigt ist, bevorzugt lösbar befestigt ist.

Bevorzugt kann die Bodenbearbeitungs- und/oder Ausbringeinrichtung zumindest eines oder eine Kombination davon umfassen und/oder die zumindest eine Bodenbearbeitungseinheit und/oder die zumindest eine Ausbringeinheit ausbildet sein als: eine Kreiseleggeneinheit, eine Scheibeneggeneinheit, eine Grubbereinheit, eine Hack- und/oder Striegeleinheit, eine Verdichtungseinheit, beispielsweise eine Packereinheit, zumindest eine Säeinheit, umfassend mehrere Sägeräte, wie Scheibensägeräte, Zinkensägeräte, und/oder dergleichen. Mittels der Bodenbearbeitungs- und/oder Ausbringeinrichtung, bevorzugt der zumindest einen Ausbringeinheit kann Verteilgut ausgebracht werden, wie beispielsweise Saatgut, Dünger, und/oder dergleichen.

Bevorzugt weist die Arbeitsmaschine den Trägerrahmen auf, mit welchem zumindest eine Bodenbearbeitungseinheit und/oder zumindest eine Ausbringeinheit, gekoppelt ist. Das heißt, dass an dem Trägerrahmen die Bodenbearbeitungseinheit und/oder Ausbringeinheit befestigt ist, bevorzugt lösbar befestigt ist. Die zumindest eine Bodenbearbeitungseinheit und/oder die zumindest eine Ausbringeinheit können direkt oder indirekt mit dem Trägerrahmen gekoppelt sein. Direkt kann verstanden werden, dass mittels Befestigungsmittel bzw. Kopplungsmittel die jeweilige Einheit an dem Trägerrahmen befestigt ist. Indirekt kann verstanden werden, dass die jeweilige Einheit an einer anderen Einheit befestigt ist, welche an dem Trägerrahmen befestigt ist.

Bevorzugt kann es vorgesehen sein, dass die Arbeitsmaschine in eine Transportstellung und eine Betriebsstellung bringbar ist. Die Arbeitsmaschine befindet sich für den Transport, beispielsweise für die Straßenfahrt, in der Transportstellung, und entspricht den gesetzlichen Vorgaben hinsichtlich der Abmessungen und der Stützlasten bzw. Achslasten. Bevorzugt ist der Trägerrahmen eingerichtet, klappbar zu sein, so dass in der Transportstellung der Trägerrahmen in einer eingeklappten Stellung ist. Bevorzugt ist die Bodenbearbeitungs- und/oder Ausbringeinrichtung eingerichtet, klappbar zu sein, so dass in der Transportstellung die Bodenbearbeitungs- und/oder Ausbringeinheiten in einer eingeklappten Stellung ist. In der Betriebsstellung ist die Arbeitsmaschine für die Bestellung der Ackerfläche eingerichtet, das heißt, dass die Bodenbearbeitungs- und/oder Ausbringeinheiten in Kontakt mit der Ackerfläche bringbar ist. Bevorzugt ist der Trägerrahmen und/oder die Bodenbearbeitungs- und/oder Ausbringeinheit in der Betriebsstellung ausgeklappt, bevorzugt vollständig ausgeklappt.

Besonders bevorzugt ist eine Stützradeinrichtung vorgesehen. Bevorzugt umfasst die landwirtschaftliche Arbeitsmaschine die Stützradeinrichtung.

Bevorzugt ist die Stützradeinrichtung eingerichtet, die Arbeitsmaschine hinsichtlich zumindest einer Last, beispielsweise Achslast und/oder Stützlast, zu unterstützen, das heißt, die Achslast und/oder die Stützlast anteilig auf eine Bodenfläche zu übertragen. Bevorzugt ist die Stützradeinrichtung eingerichtet, eine Stützradlast aufzunehmen. Bevorzugt ist es vorgesehen, dass durch die Stützradeinrichtung ein Anteil des Gesamtgewichts der Arbeitsmaschine und/oder des Maschinenverbunds auf den Boden, beispielsweise die Straße oder die Ackerfläche, übertragbar ist. Bevorzugt kann durch die Stützradlast eine ausreichende Stützkraft und/oder maximal zulässige Achslast erreicht werden. Dies ist abhängig von der jeweiligen Ausgestaltung der Arbeitsmaschine, und/oder des landwirtschaftlichen Maschinenverbunds mit der Arbeitsmaschine.

Gemäß einer bevorzugten Ausführungsform kann es vorgesehen sein, dass in der Transportstellung der Arbeitsmaschine die Stützradeinrichtung mit dem Boden in Kontakt ist. Bevorzugt kann es vorgesehen sein, dass in der Betriebsstellung der Arbeitsmaschine die Stützradeinrichtung mit dem Boden nicht in Kontakt ist. In der Betriebsstellung ist dies nicht nötig, da die Arbeitsmaschine zumindest teilweise mittels der Bodenbearbeitungs- und/oder Ausbringeinrichtung bzw. der zumindest einen Bodenbearbeitungseinheit und/oder zumindest einen Ausbringeinheit und gegebenenfalls weiteren Elementen gegenüber dem Boden abgestützt ist.

Die Stützradeinrichtung ist vorgesehen, um eine Arbeitsmaschine mit einem großen Gesamtgewicht, bei welcher bei Straßenfahrt als auch Feldarbeit eine gewünschte Gewichtsverteilung erreicht wird, zu schaffen.

Bevorzugt ist es vorgesehen, dass die Stützradeinrichtung in der Transportstellung und in der Betriebsstellung der Arbeitsmaschine in einem mittleren Bereich der Arbeitsmaschine angeordnet ist, in einer Fahrtrichtung und/oder quer zu der Fahrtrichtung. Durch die Anordnung in dem mittleren Bereich ragt die Stützradeinrichtung nicht hinten über die Arbeitsmaschine bzw. die Bodenbearbeitungs- und/oder Ausbringeinrichtung hinaus.

In der Transportstellung der Arbeitsmaschine ist die Stützradeinrichtung in dem mittleren Bereich angeordnet. In der Betriebsstellung der Arbeitsmaschine ist die Stützradeinrichtung in dem mittleren Bereich angeordnet.

Gemäß einer bevorzugten Ausführungsform kann es vorgesehen sein, dass bei einem Wechsel zwischen der Transportstellung und der Betriebsstellung die Stützradeinrichtung in dem mittleren Bereich angeordnet ist. Bevorzugt ist die Stützradeinrichtung stets in dem mittleren Bereich angeordnet. Das heißt, die Stützradeinrichtung sowohl in der Transportstellung, der Betriebsstellung als auch jeder Stellung zwischen der Transportstellung und der Betriebsstellung in dem mittleren Bereich angeordnet ist.

Dadurch, dass die Stützradeinrichtung in der Transportstellung und in der Betriebsstellung in dem mittleren Bereich angeordnet ist, kann eine besonders platzsparende Unterbringung der Stützradeinrichtung erreicht werden, so dass auf aufwändige und schwere Mechaniken, wie beispielsweise Klappkinematiken, etwa mit langen Klapparmen, verzichtet werden kann.

Bevorzugt kann es sich bei der Fahrtrichtung um die Richtung handeln, in die sich die Arbeitsmaschine bewegt.

Bevorzugt kann der mittlere Bereich anhand einer ersten Mittellinie der Arbeitsmaschine und einer zweiten Mittellinie definiert sein, wobei bevorzugt die erste Mittellinie sich in Fahrtrichtung und die zweite Mittellinie sich quer zur Fahrtrichtung erstrecken. Bevorzugt kann es vorgesehen sein, dass der mittlere Bereich anhand von zumindest einer anderen Bezugslinien definiert sein kann. Bevorzugt kann auch eine Kombination einer Mittellinie und einer anderen Bezugslinie denkbar sein.

Bevorzugt kann der mittlere Bereich definiert sein durch die erste Mittellinie, welche parallel zu der Fahrtrichtung ist, und welche im Wesentlichen in der Mitte der Arbeitsmaschine angeordnet ist, sowie einer Bezugslinie, welche sich entlang des Trägerrahmens erstreckt.

Bevorzugt kann der mittlere Bereich definiert sein wie folgt. Um die erste Mittellinie bzw. Bezugslinie kann ein erster Bereich in Fahrtrichtung gesehen definiert sein, mit einer Ausdehnung von der ersten Mittellinie bzw. Bezugslinie quer zu der Fahrtrichtung von bis zu 40% einer gesamten Arbeitsbreite, bevorzugter bis zu 30% der gesamten Arbeitsbreite, bevorzugter bis zu 25% der gesamten Arbeitsbreite. Alternativ oder kumulativ kann ein absoluter Wert für die Ausdehnung quer zur Fahrtrichtung angegeben sein, beispielsweise 3 Meter, bevorzugt 2,5 Meter, und bevorzugt 2 Meter.

Um die zweite Mittellinie bzw. Bezugslinie kann ein zweiter Bereich quer zur Fahrtrichtung gesehen definiert sein, mit einer Ausdehnung von der zweiten Mittellinie bzw. Bezugslinie in der Fahrtrichtung von bis zu 40% einer gesamten Länge, bevorzugter bis zu 30% der gesamten Länge, bevorzugter bis zu 25% der gesamten Länge. Alternativ oder kumulativ kann ein absoluter Wert für die Ausdehnung in Fahrtrichtung angegeben sein, beispielsweise höchstens 3 Meter, bevorzugt höchstens 2,5 Meter, und bevorzugt höchstens 2 Meter.

Gemäß einer bevorzugten Ausführungsform kann es vorgesehen sein, dass die Stützradeinrichtung mit dem Trägerrahmen gekoppelt ist. Bevorzugt ist es vorgesehen, dass durch die Kopplung der Stützradeinrichtung mit dem Trägerrahmen die Stützradeinrichtung durch den Trägerrahmen zwangsgeführt ist. Bevorzugt ist bei einer Bewegung des Trägerrahmens die Stützradeinrichtung mit dem Trägerrahmen zwangsgeführt. Bevorzugt ist die Kopplung der Stützradeinrichtung mit dem Trägerrahmen derart, dass bei einer Bewegung des Trägerrahmens, insbesondere einer Klappbewegung des Trägerrahmens, die Stützradeinrichtung zwangsgeführt ist. Eine Bewegung des Trägerrahmens können Drehbewegungen und/oder Translationsbewegungen des Trägerrahmens sein.

Der Trägerrahmen kann in der Betriebsstellung ausgeklappt sein und in der Transportstellung eingeklappt sein. In der Betriebsstellung steht die maximale Arbeitsbreite der Arbeitsmaschine zur Verfügung. Durch das Einklappen des Trägerrahmens kann die gesamte Breite der Arbeitsmaschine verringert werden, so dass die rechtlich erlaubte maximale Breite der Arbeitsmaschine für die Straßenfahrt vorliegt.

Unter zwangsgeführt kann verstanden werden, dass eine Bewegung des Trägerrahmens unmittelbar zu einer Bewegung der Stützradeinrichtung führt. Die Zwangsführung der Stützradeinrichtung ist eine Zwangsführung aufgrund der mechanischen Konstruktion bzw. Kopplung mit dem Trägerrahmen.

Gemäß einer bevorzugten Ausführungsform kann es vorgesehen sein, dass der Trägerrahmen zumindest zwei Seitenrahmenteile und ein Mittelrahmenteil aufweist. Gemäß einer weiteren bevorzugten Ausführungsform kann es vorgesehen sein, dass der Trägerrahmen durch das Mittelrahmenteil und zumindest zwei gegenüber dem Mittelrahmenteil mittels zumindest einer Stelleinrichtung um eine Drehachse drehbare Seitenrahmenteile gebildet ist.

Gemäß einer bevorzugten Ausführungsform kann es vorgesehen sein, dass das Mittelrahmenteil einen Freibereich definiert. Bevorzugt ist der Freibereich eingerichtet, zumindest teilweise die Stützradeinrichtung aufzunehmen, insbesondere in der Transportstellung. Durch den Freibereich ist es möglich, eine platzsparende und kompakte Ausgestaltung der Arbeitsmaschine zu realisieren.

Bevorzugt ist die Stützradeinrichtung in den Freibereich hineinschwenkbar und herausschwenkbar. Bevorzugt ist es vorgesehen, dass bei einem Wechsel in die Betriebsstellung die Stützradeinrichtung zumindest teilweise in den Freibereich hineinzuschwenken und bei einem Wechsel in die Transportstellung die Stützradeinrichtung zumindest teilweise aus dem Freibereich herauszuschwenken.

Gemäß einer bevorzugten Ausführungsform kann es vorgesehen sein, dass das Mittelrahmenteil zumindest drei Rahmenabschnitte aufweist. Bevorzugt weist das Mittelrahmenteil einen ersten Rahmenabschnitt, einen zweiten Rahmenabschnitt, und einen dritten Rahmenabschnitt auf.

Bevorzugt ist es vorgesehen, dass die Rahmenabschnitte in Fahrtrichtung hintereinander angeordnet sind. Bevorzugt ist der erste Rahmenabschnitt vor dem zweiten Rahmenabschnitt und der zweite Rahmenabschnitt vor dem dritten Rahmenabschnitt angeordnet. Bevorzugt ist der zweite Rahmenabschnitt mit dem ersten Rahmenabschnitt und dem dritten Rahmenabschnitt gekoppelt, insbesondere fest und/oder starr verbunden.

Bevorzugt ist es vorgesehen, dass sich der erste Rahmenabschnitt im Wesentlichen quer zur Fahrtrichtung erstreckt, und bevorzugt in einer Höhenrichtung. Im Wesentlichen heißt, dass die Erstreckung in Fahrtrichtung gegenüber der Erstreckung quer zur Fahrtrichtung und/oder zur Höhenrichtung klein ist. Bevorzugt ist es vorgesehen, dass sich der dritte Rahmenabschnitt im Wesentlichen quer zur Fahrtrichtung erstreckt, und bevorzugt in einer Höhenrichtung. Im Wesentlichen heißt, dass die Erstreckung in Fahrtrichtung gegenüber der Erstreckung quer zur Fahrtrichtung und/oder zur Höhenrichtung klein ist. Bevorzugt ist es vorgesehen, dass sich der zweite Rahmenabschnitt im Wesentlichen in Fahrtrichtung erstreckt, und bevorzugt in der Höhenrichtung. Im Wesentlichen heißt, dass die Erstreckung quer zur Fahrtrichtung gegenüber der Erstreckung in Fahrtrichtung und/oder zur Höhenrichtung klein ist.

Durch die Anordnung der Rahmenabschnitte zueinander und/oder der Ausgestaltung des Mittelrahmenteils ist der Freiraum geschaffen, welcher bevorzugt durch die Rahmenabschnitte definiert ist.

Bevorzugt ist das Mittelrahmenteil entlang der Höhenrichtung gesehen, H-förmig ausgebildet.

Besonders bevorzugt ist die jeweilige Drehachse der Seitenrahmenteile mit dem Mittelrahmenteil verbunden. Bevorzugt ist die jeweilige Drehachse mit dem ersten und dem dritten Rahmenabschnitt verbunden. Bevorzugt ist die Drehachse des ersten Seitenrahmenteils und die Drehachse des zweiten Seitenrahmenteils auf gegenüberliegenden Seiten des zweiten Rahmenabschnitts angeordnet. Beispielsweise ist die Drehachse des ersten Seitenrahmenteils in Fahrtrichtung auf einer linken Seite des zweiten Rahmenabschnitts und die Drehachse des zweiten Seitenrahmenteils auf einer rechten Seite des zweiten Rahmenabschnitts angeordnet.

Besonders bevorzugt kann eine minimale Erstreckung quer zur Fahrtrichtung des ersten Rahmenabschnitts und des dritten Rahmenabschnitts durch einen Abstand der Drehachsen der Seitenrahmenteile definiert sein.

Bevorzugt ist zumindest eine Stelleinrichtung der Seitenrahmenteile mit dem Trägerrahmen drehbar gekoppelt, insbesondere mit dem Mittelrahmenteil und bevorzugter mit dem zweiten Rahmenabschnitt des Mittelrahmenteils. Bevorzugt ist ein Anlenkpunkt vorgesehen, mittels welchem die Stelleinrichtung mit dem Trägerrahmen drehbar gekoppelt ist. Bevorzugt ist die Stelleinrichtung in Fahrtrichtung zwischen dem ersten Rahmenabschnitt und dem dritten Rahmenabschnitt angeordnet.

Bevorzugt sind eine erste Stelleinrichtung und eine zweite Stelleinrichtung vorgesehen, wobei die erste Stelleinrichtung mit dem ersten Seitenrahmenteil und die zweite Stelleinrichtung mit dem zweiten Seitenrahmenteil gekoppelt ist.

Bevorzugt können die Seitenrahmenteile klappbar sein. Durch eine derartige Ausgestaltung ist es möglich, eine große Arbeitsbreite der Arbeitsmaschine zu verwirklichen. Bevorzugt ist die zumindest eine Stelleinrichtung, insbesondere sind die zwei Stelleinrichtungen, mittels einer Steuereinrichtung steuer- und/oder regelbar ist. Alternativ oder kumulativ kann die Stelleinrichtung manuell betätigbar sein. Bevorzugt kann die zumindest eine Stelleinrichtung durch zumindest einen hydraulisch betätigten Zylinder gebildet sein. Bevorzugt ist an den Seitenrahmenteilen und/oder dem Mittelrahmenteil die Bodenbearbeitungs- und/oder Ausbringeinrichtung bzw. die Bodenbearbeitungseinheiten und/oder Ausbringeinheiten gelagert.

Weiter bevorzugt ist das jeweilige Seitenrahmenteil durch die zugehörige Drehachse in einen ersten Hebel und einen zweiten Hebel unterteilt. Gedanklich kann das jeweilige Seitenrahmenteil durch die zugehörige Drehachse in zwei Teile unterteilt werden, in einen Teil links der Drehachse und einen Teil rechts der Drehachse, in Fahrtrichtung und/oder in Höhenrichtung gesehen. Der erste Hebel ist bevorzugt länger als der zweite Hebel.

Bevorzugt ist die Stützradeinrichtung, bevorzugter die Stützradeinheiten, an dem zweiten Hebel angeordnet. Der erste Hebel dreht von der Transportstellung in die Betriebsstellung entgegen dem Uhrzeigersinn, gesehen entlang der Fahrtrichtung nach vorne, und der zweite Hebel ebenso. Der erste Hebel ist in der Transportstellung oberhalb der Drehachse und in der Betriebsstellung weiter außenliegend hinsichtlich der Drehachse. Der zweite Hebel ist in der Transportstellung unterhalb der Drehachse und in der Betriebsstellung weiter innenliegend hinsichtlich der Drehachse.

Bevorzugt ist die Stützradeinrichtung mit einem der Seitenrahmenteile oder mit den zumindest zwei Seitenrahmenteilen gekoppelt.

Die zumindest eine Stelleinrichtung ist eingerichtet, betätigbar zu sein, so dass die Seitenrahmenteile um die jeweilige Drehachse drehbar sind, wodurch diese bevorzugt in die Transportstellung oder die Betriebsstellung bringbar, insbesondere klappbar, sind. Bevorzugt ist in der Betriebsstellung der Arbeitsmaschine die Stützradeinrichtung durch die Bewegung der Seitenrahmenteile nicht in Kontakt mit dem Boden, wobei die Seitenrahmenteile zumindest weitgehend waagerecht zum Mittelrahmenteil sind.

In der Transportstellung der Arbeitsmaschine ist die Stützradeinrichtung in Kontakt mit dem Boden, wobei die Seitenrahmenteile zumindest weitgehend senkrecht zum Mittelrahmenteil gedreht sind. Somit kann insbesondere ein Anteil des Gesamtgewichts der Arbeitsmaschine mittels der Stützradeinrichtung auf den Boden übertragen werden.

Die Steuereinrichtung ist gemäß einer bevorzugten Ausführungsvariante zur Betätigung, und/oder Steuerung und/oder Regelung, der Stelleinrichtung eingerichtet, dass in der Betriebsstellung der Arbeitsmaschine die Stützradeinrichtung durch Bewegung des Trägerrahmens nicht in Kontakt mit dem Boden ist und die Seitenrahmenteile in eine zumindest weitgehend waagerecht zum Mittelrahmenteil gedreht sind. Bevorzugt wird durch die waagerechte Lage der Seitenrahmenteile eine Bodenkontaktposition der Bodenbearbeitungs- und/oder Ausbringeinrichtung bzw. Bodenbearbeitungseinheiten und/oder Ausbringeinheiten erreicht. Somit wird insbesondere erreicht, dass die jeweiligen Bodenbearbeitungs- und/oder Ausbringeinrichtungen bzw. Bodenbearbeitungseinheiten und/oder Ausbringeinheiten eine ausreichende Last aufweisen, um somit bspw. eine Bodenfläche ausreichend rückverfestigen zu können.

Gemäß einer weiteren bevorzugten Ausführungsform kann es vorgesehen sein, dass die Stützradeinrichtung mittels einer Koppeleinrichtung mit dem Trägerrahmen gekoppelt ist. Bevorzugt ist die Stützradeinrichtung mit dem Mittelrahmenteil und/oder zumindest einem der Seitenrahmenteile des Trägerrahmens gekoppelt.

Bevorzugt kann es vorgesehen sein, dass die Koppeleinrichtung drehbar um eine Drehachse mit dem Trägerrahmen gekoppelt ist. Das heißt, dass die Koppeleinrichtung sich gegenüber dem Trägerrahmen, beispielsweise dem zumindest einem Seitenrahmenteil, drehen kann. Bevorzugt ist eine Stelleinrichtung vorgesehen, welche mit dem Trägerrahmen und der Koppeleinrichtung verbunden ist. Bei Betätigung der Stelleinrichtung kann die Koppeleinrichtung gegenüber dem Trägerrahmen gedreht werden. Bevorzugt ist die Drehachse der Koppeleinrichtung in der Transportstellung entlang der Höhenrichtung verlaufend angeordnet. Bevorzugt ist die Drehachse der Koppeleinrichtung in der Transportstellung quer zu der Fahrtrichtung verlaufend angeordnet.

Bevorzugt ist die Stelleinrichtung der Koppeleinrichtung in der Transportstellung und/oder der Betriebsstellung starr, insbesondere hydraulisch starr. Das heißt, dass die Stelleinrichtung sich nicht verändert, so dass die Stützradeinrichtung nicht mittels der Koppeleinrichtung bewegbar ist.

Durch die Koppeleinrichtung kann es möglich sein, die Stützradeinrichtung korrekt gegenüber dem Boden zu positionieren. Bevorzugt ist es denkbar, die Stützradlast einzustellen. Bevorzugt kann es vorgesehen sein, dass eine Vorspannkraft der Stützradeinrichtung mittels der Stelleinrichtung der Koppeleinrichtung einstellbar ist, bevorzugt steuer- und/oder regelbar ist. Dadurch kann es möglich sein, die Stützradeinrichtung mit der Stützradlast entsprechend an die Transportstellung bzw. die Betriebsstellung einer Arbeitsmaschine und die Ausgestaltung der Arbeitsmaschine anzupassen.

Gemäß einer weiteren bevorzugten Ausführungsform kann es vorgesehen sein, dass die Stützradeinrichtung zumindest eine Laufradeinrichtung aufweist. Bevorzugt kann die Laufradeinrichtung durch zumindest ein Einzelrad, eine Zwillingsanordnung und/oder eine Tandemanordnung gebildet sein.

Gemäß einer bevorzugten Ausführungsform kann es vorgesehen sein, dass die Koppeleinrichtung eingerichtet ist, die Stützradeinrichtung, insbesondere die zumindest eine Laufradeinrichtung, gegenüber dem Trägerrahmen um die Drehachse zu verschwenken, wobei bevorzugt die Koppeleinrichtung eingerichtet ist, in der Transportstellung eine auf die Stützradeinrichtung wirkende Vorspannkraft vorzugeben, insbesondere zu begrenzen.

Gemäß einer bevorzugten Ausführungsform kann es vorgesehen sein, dass eine Begrenzungseinrichtung vorgesehen ist, welche eingerichtet ist, eine auf die Stützradeinrichtung wirkende Vorspannkraft zu begrenzen. Die Begrenzungseinrichtung kann als eine Überlastsicherung angesehen werden. Bevorzugt kann die Begrenzungseinrichtung der Koppeleinrichtung und/oder der Stelleinrichtung der Koppeleinrichtung zugeordnet sein oder ein Teil der Koppeleinrichtung sein.

Um eine ausreichende Vorspannkraft auf die Stützradeinrichtung zu erreichen ist es gemäß einer Weiterbildung der Erfindung möglich, dass die Steuereinrichtung durch ein hydraulisches System gebildet ist und die Stelleinrichtung der Koppeleinrichtung durch zumindest einen hydraulisch betätigten Zylinder, der Bestandteil des hydraulischen Systems ist, gebildet ist. Das hydraulische System kann insbesondere eine Begrenzungseinrichtung umfassen, die eingerichtet ist, die Vorspannkraft der Stützradeinrichtung zu begrenzen. Die Begrenzungseinrichtung kann beispielsweise gebildet sein durch zumindest einen Federspeicher und/oder ein Sperrventil und/oder ein Druckbegrenzungsventil und/oder ein Druckregelventil und eingerichtet sein, die Vorspannkraft der Stützradeinrichtung zu begrenzen. Alternativ oder ergänzend kann die Vorspannkraft der Stützradeinrichtung mittels einer mechanischen Schraubenfeder vorgegeben und/oder begrenzt sein. Das hydraulische System kann Bestandteil der Steuereinrichtung sein.

Gemäß einer weiteren bevorzugten Ausführungsform kann es vorgesehen sein, dass die Stützradeinrichtung durch ein Schwenken um zumindest eine, bevorzugt parallel zu der Fahrtrichtung ausgerichteten, Schwenkachse in die Betriebsstellung oder die Transportstellung bringbar ist. Bevorzugt ist es vorgesehen, dass die Stützradeinrichtung durch das Schwenken um die Schwenkachse von der Betriebsstellung in die Transportstellung und von der Transportstellung in die Betriebsstellung bringbar ist.

Besonders bevorzugt ist es vorgesehen, dass die Schwenkachse, um welche die Stützradeinrichtung schwenkbar ist, der Drehachse eines Seitenrahmenteils entspricht.

Bevorzugt kann es vorgesehen sein, dass die Stützradeinrichtung um zumindest 75°, bevorzugter zumindest 80°, bevorzugter zumindest 90° um die Schwenkachse schwenkbar ist.

Gemäß einer weiteren bevorzugten Ausführungsform kann es vorgesehen sein, dass ein Schwenkbereich der Stützradeinrichtung innerhalb des mittleren Bereichs liegt. Der Schwenkbereich ist derjenige Bereich, in welchem die Stützradeinrichtung geschwenkt wird.

Gemäß einer weiteren bevorzugten Ausführungsform kann es vorgesehen sein, dass die Stützradeinrichtung eine erste Stützradeinheit und eine zweite Stützradeinheit aufweist. Bevorzugt ist es vorgesehen, dass die erste Stützradeinheit eine erste Laufradeinheit und die zweite Stützradeinheit eine zweite Laufradeinheit umfasst. Die Laufradeinrichtung kann durch die Laufradeinheiten gebildet sein.

Bevorzugt ist die erste Stützradeinheit mit einem ersten Seitenrahmenteil und die zweite Stützradeinheit mit einem zweiten Seitenrahmenteil des Trägerrahmens gekoppelt. Alternativ können die Stützradeinheiten auch an einem Seitenrahmenteil angeordnet sein. Alternativ oder kumulativ kann zumindest eine Stützradeinheit an dem Mittelrahmenteil angeordnet sein.

Bevorzugt sind die beiden Stützradeinheiten unabhängig oder abhängig voneinander betätigbar. Beispielsweise kann dies durch eine entsprechende hydraulische Steuerung realisiert sein.

Gemäß einer weiteren bevorzugten Ausführungsform kann es vorgesehen sein, dass die zumindest eine Stelleinrichtung des Trägerrahmens, bevorzugt eines Seitenrahmenteils, und die Koppeleinrichtung, bevorzugt die Stelleinrichtung der Koppeleinrichtung, durch eine Verschaltung gekoppelt sind, bevorzugt fluidisch gekoppelt sind, wodurch abhängig von der Betätigung der zumindest einen Stelleinrichtung die Koppeleinrichtung betätigbar ist.

Bevorzugt kann die Verschaltung eine hydraulische, elektrohydraulische oder elektrische Verschaltung sein. Bevorzugt umfasst die Verschaltung eine Ventileinrichtung, welche, bevorzugt mittels der Steuereinrichtung, entsprechend betätigbar ist. Bevorzugt weist die Ventileinrichtung zumindest ein Ventil auf, welche einen Fluidstrom, bevorzugt Hydraulikstrom, reguliert.

Bevorzugt ist die Verschaltung derart, dass bei einer Betätigung der zumindest einen Stelleinrichtung des Trägerrahmens die zumindest eine Stelleinrichtung der Koppeleinrichtung betätigbar ist. Bevorzugt ist die Betätigung der zumindest einen Stelleinrichtung der Koppeleinrichtung gleichzeitig oder zeitversetzt zu der Betätigung der zumindest einen Stelleinrichtung des Trägerrahmens.

Bevorzugt kann es vorgesehen sein, dass in der Betriebsstellung die zumindest eine Stelleinrichtung der Koppeleinrichtung eingefahren ist, bevorzugt im Wesentlichen vollständig eingefahren ist. Bevorzugt kann es vorgesehen sein, dass in der Transportstellung die zumindest eine Stelleinrichtung der Koppeleinrichtung ausgefahren ist, bevorzugt im Wesentlichen vollständig ausgefahren ist. Bei einem Wechsel zwischen Transportstellung und Betriebsstellung ist es vorgesehen, die zumindest eine Stelleinrichtung der Koppeleinrichtung entsprechend zu betätigen.

Die Verschaltung ist vorteilhaft, um beim Wechsel in die Transportstellung oder die Betriebsstellung hierdurch Kollisionen mit anderen Bauteilen zu verhindern. Ebenso bevorzugt ist es, dass die Stelleinrichtung der Koppeleinrichtung nicht unabsichtlich oder fehlerhaft bedient werden kann, sondern lediglich betätigbar ist, wenn die Stelleinrichtung des Trägerrahmens, bevorzugt zumindest eines Seitenrahmenteils, betätigt wird. Bevorzugt ist es vorgesehen, dass die jeweilige Laufradeinheit in der Transportstellung über das jeweilige Seitenrahmenteil nach unten hin übersteht. Bevorzugt ist es vorgesehen, dass die jeweilige Laufradeinheit in der Betriebsstellung quer zur Fahrtrichtung im Wesentlichen vollständig mit dem Seitenrahmenteil überlappt, das heißt, nicht über das Seitenrahmenteil übersteht.

Bevorzugt kann es vorgesehen sein, dass in der Betriebsstellung die Stützradeinrichtung, insbesondere die zumindest eine Laufradeinrichtung, bevorzugter die zumindest eine Laufradeinheit, in Höhenrichtung oberhalb des zumindest einen Seitenrahmenteils angeordnet ist/sind. Bevorzugt kann es vorgesehen sein, dass in der Transportstellung die Stützradeinrichtung, insbesondere die zumindest eine Laufradeinrichtung, bevorzugter die zumindest eine Laufradeinheit, in Fahrtrichtung gesehen, zwischen den Seitenrahmenteilen angeordnet ist/sind.

Bevorzugt kann es vorgesehen sein, dass entlang der Höhenrichtung gesehen und in der Betriebsstellung, die Stützradeinrichtung, insbesondere die zumindest eine Laufradeinrichtung, bevorzugter die zumindest eine Laufradeinheit, zumindest teilweise mit dem zumindest einen Seitenrahmenteil überlappt.

Bevorzugt kann es vorgesehen sein, dass in der Betriebsstellung die Stützradeinrichtung, insbesondere die zumindest eine Laufradeinrichtung, bevorzugter die zumindest eine Laufradeinheit, in Höhenrichtung oberhalb der jeweiligen Drehachse des zumindest einen Seitenrahmenteils angeordnet ist. Bevorzugt kann es vorgesehen sein, dass in der Transportstellung die Stützradeinrichtung, insbesondere die zumindest eine Laufradeinrichtung, bevorzugter die zumindest eine Laufradeinheit, in Höhenrichtung unterhalb der jeweiligen Drehachse des zumindest einen Seitenrahmenteils angeordnet ist.

Gemäß einer bevorzugten Ausführungsform kann es vorgesehen sein, dass eine erste Bodenbearbeitungseinheit und eine zweite Bodenbearbeitungseinheit vorgesehen sind, wobei die erste Bodenbearbeitungseinheit mit einem ersten Seitenrahmenteil und die zweite Bodenbearbeitungseinheit mit einem zweiten Seitenrahmenteil gekoppelt ist. Bevorzugt umfasst die Arbeitsmaschine die erste Bodenbearbeitungseinheit und die zweite Bodenbearbeitungseinheit.

Insbesondere sind die erste und zweite Bodenbearbeitungseinheit unabhängig voneinander, das heißt zwei separate Bodenbearbeitungseinheiten. Dadurch, dass jeweils eine der Bodenbearbeitungseinheiten mit einem der Seitenrahmenteile gekoppelt ist, können die jeweiligen Bodenbearbeitungseinheiten entsprechend den Seitenrahmenteilen gedreht, insbesondere geklappt, werden.

Bevorzugt kann es vorgesehen sein, dass die erste und zweite Bodenbearbeitungseinheit in der Betriebsstellung eine im Wesentlichen durchgängige, quer zur Fahrtrichtung erstreckende, Bodenbearbeitungseinrichtung ausbilden. Bevorzugt erstrecken sich die Bodenbearbeitungseinheiten im Wesentlichen über die gesamte Arbeitsbreite der Arbeitsmaschine. Hierdurch kann eine durchgehende Bodenbearbeitung gewährleistet sein.

Besonders bevorzugt sind die erste Bodenbearbeitungseinheit und die zweite Bodenbearbeitungseinheit in Fahrtrichtung vor den Seitenrahmenteilen angeordnet.

Bevorzugt ist die erste Bodenbearbeitungseinheit vor dem ersten Seitenrahmenteil und die zweite Bodenbearbeitungseinheit vor dem zweiten Seitenrahmenteil angeordnet.

Dadurch, dass die Bodenbearbeitungseinheiten vor den Seitenrahmenteilen angeordnet sein können, kann eine gewisse Entkopplung der Bodenbearbeitungseinheiten von den Seitenrahmenteilen erreicht werden.

Bevorzugt sind die Bodenbearbeitungseinheiten jeweils eine Kreiseleggeneinheit. Es können jedoch auch andere Ausgestaltungen denkbar sein.

Gemäß einer weiteren bevorzugten Ausführungsform kann es vorgesehen sein, dass eine Kopplungseinrichtung vorgesehen ist, welche eingerichtet ist, die Bodenbearbeitungseinheiten mit den Seitenrahmenteilen zu koppeln. Bevorzugt ist die Kopplungseinrichtung eingerichtet, die Bodenbearbeitungseinheiten in ihrer Position gegenüber den Seitenrahmenteilen einzustellen. Hierdurch können die Bodenbearbeitungseinheiten weiter von den Seitenrahmenteilen entkoppelt werden.

Gemäß einer weiteren bevorzugten Ausführungsform kann es vorgesehen sein, dass die Kopplungseinrichtung zumindest eine Parallelogramm-Anordnung umfasst, welche sich jeweils entlang der Fahrtrichtung erstreckt. Durch die Parallelogramm-Anordnung können die Bodenbearbeitungseinheiten sicher gegenüber den Seitenrahmenteilen in ihrer Position eingestellt werden und dabei die relative Ausrichtung beibehalten werden.

Weiter bevorzugt kann es vorgesehen sein, dass die Koppeleinrichtung eine Stelleinrichtung umfasst, wobei die Stelleinrichtung eingerichtet ist, eine auf die zumindest eine Bodenbearbeitungseinheit wirkende Vorspannkraft einzustellen. Denkbar kann es sein, jeder Bodenbearbeitungseinheit eine Kopplungseinrichtung zuzuordnen.

Gemäß einer weiteren bevorzugten Ausführungsform kann es vorgesehen sein, dass eine erste Ausbringeinheit und eine zweite Ausbringeinheit vorgesehen sind, welche jeweils mit einem der Seitenrahmenteilen gekoppelt ist und in einer Fahrtrichtung hinter den Seitenrahmenteilen angeordnet sind. Bevorzugt ist die erste Ausbringeinheit mit dem ersten Seitenrahmenteil und die zweite Ausbringeinheit mit dem zweiten Seitenrahmenteil gekoppelt.

Bevorzugt sind die Ausbringeinheiten eingerichtet, landwirtschaftliches Verteilgut auszubringen.

Bevorzugt weisen die Ausbringeinheiten ein oder mehrere Ausbringelemente auf. Bevorzugt sind die Ausbringelemente der ersten Ausbringeinheit mit einem ersten Balkenrahmen drehbar gekoppelt. Bevorzugt sind die Ausbringelemente der zweiten Ausbringeinheit mit einem zweiten Balkenrahmen drehbar gekoppelt.

Insbesondere sind die erste und zweite Ausbringeinheit unabhängig voneinander, das heißt zwei separate Ausbringeinheiten. Dadurch, dass jeweils eine der Ausbringeinheiten mit einem der Seitenrahmenteile gekoppelt ist, können die jeweiligen Ausbringeinheiten entsprechend mit den Seitenrahmenteilen gedreht, insbesondere geklappt, werden.

Bevorzugt kann es vorgesehen sein, dass die erste und zweite Ausbringeinheit in der Betriebsstellung eine im Wesentlichen durchgängige, quer zur Fahrtrichtung erstreckende, Ausbringeinrichtung ausbilden. Bevorzugt erstrecken sich die Ausbringeinheiten über die gesamte Arbeitsbreite der Arbeitsmaschine, bevorzugt in regelmäßigen Abständen, wie beispielsweise Abstände von 12,5 cm, 15 cm, und/oder dergleich. Hierdurch kann eine durchgehende Ausbringung von Verteilgut gewährleistet sein.

Gemäß einer weiteren bevorzugten Ausführungsform kann es vorgesehen sein, dass eine erste weitere Bodenbearbeitungseinheit und eine zweite weitere Bodenbearbeitungseinheit vorgesehen sind. Bevorzugt kann es sich bei den weiteren Bodenbearbeitungseinheiten jeweils um eine Verdichtungseinheit, beispielsweise eine Packereinheit, handeln. Bevorzugt sind die weiteren Bodenbearbeitungseinheiten mit den Seitenrahmenteilen gekoppelt, insbesondere starr gekoppelt. Bevorzugt ist die erste weitere Bodenbearbeitungseinheit mit dem ersten Seitenrahmenteil und die zweite weitere Bodenbearbeitungseinheit mit dem zweiten Seitenrahmenteil gekoppelt. Alternativ können die weiteren Bodenbearbeitungseinheiten auch beweglich mit den Seitenrahmenteilen gekoppelt sein.

Weiter bevorzugt kann es vorgesehen sein, dass die jeweilige weitere Bodenbearbeitungseinheit in Fahrtrichtung auf Höhe der Seitenrahmenteile, vor den Seitenrahmenteilen oder hinter den Seitenrahmenteilen angeordnet ist.

Gemäß der Ausführungsform, dass die weiteren Bodenbearbeitungsgeräte starr mit den Seitenrahmenteilen verbunden sind, können auf den Trägerrahmen einwirkende Kräfte auf den Boden geleitet werden. Bevorzugt können dies die Gewichtskraft der Arbeitsmaschine sein und/oder Kräfte, welche beispielsweise einer Trägerplattform, beispielsweise einem Arbeitsgerät, auf die Arbeitsmaschine übertragen werden.

Gelöst wird die zugrunde liegende Aufgabe auch von einem landwirtschaftlichen Maschinenverbund, welcher sich durch eine landwirtschaftliche Arbeitsmaschine und einer landwirtschaftlichen Trägerplattform auszeichnet. Bevorzugt kann die landwirtschaftliche Arbeitsmaschine eine Arbeitsmaschine gemäß einer beschriebenen Ausführungsform sein.

Gemäß einer bevorzugten Ausführungsform kann es vorgesehen sein, dass die landwirtschaftliche Trägerplattform eine Kupplungseinrichtung umfasst, wobei die Kupplungseinrichtung eingerichtet ist, die landwirtschaftliche Arbeitsmaschine aufzunehmen. Bevorzugt ist die Kupplungseinrichtung eine Dreipunktanhängung und/oder eine Vierpunktanhängung.

Gemäß einer bevorzugten Ausführungsform kann es vorgesehen sein, dass die landwirtschaftliche Trägerplattform ein Zugfahrzeug und/oder ein landwirtschaftliches Arbeitsgerät ist. Bevorzugt kann das landwirtschaftliche Arbeitsgerät ein gezogenes landwirtschaftliches Arbeitsgerät sein.

Gemäß einer bevorzugten Ausführungsform kann es vorgesehen sein, dass das Arbeitsgerät zumindest ein Fahrwerk, bevorzugt mit zumindest einer Abstützeinrichtung, aufweist.

Besonders bevorzugt ist es vorgesehen, dass die Arbeitsmaschine in Fahrtrichtung hinter dem Fahrwerk angeordnet ist.

Gemäß einer weiteren bevorzugten Ausführungsform kann es vorgesehen sein, dass die Kupplungseinrichtung eingerichtet ist, einen Anteil der Gewichtskraft des Arbeitsgeräts auf die Arbeitsmaschine zu übertragen.

Besonders bevorzugt kann es vorgesehen sein, dass die Kupplungseinrichtung eingerichtet ist, einen Anteil der Gewichtskraft des Arbeitsgeräts auf den Trägerrahmen der Arbeitsmaschine, insbesondere auf die mit den Seitenrahmenteilen gekoppelten weiteren Bodenbearbeitungseinheiten, zu übertragen.

Gemäß einer bevorzugten Ausführungsform kann es vorgesehen sein, dass die Kopplungseinrichtung vorgesehen ist, welche eingerichtet ist, die Bodenbearbeitungseinheiten mit den Seitenrahmenteilen zu koppeln und die Bodenbearbeitungseinheiten in ihrer Position gegenüber den Seitenrahmenteilen einzustellen, im Wesentlichen unabhängig von einem auf den Trägerrahmen übertragenen Anteil der Gewichtskraft des Arbeitsgeräts.

Das Arbeitsgerät umfasst bevorzugt eine Rahmenkonstruktion, welche an einer Frontseite eine Zugvorrichtung und an einer Heckseite ein Fahrwerk aufweist, wobei die Zugvorrichtung zur Aufnahme einer Betriebszugkraft einer Zugmaschine in Fahrtrichtung und/oder zur Übertragung einer Betriebsstützlast des Arbeitsgeräts mit Arbeitsmaschine auf die Zugmaschine konfiguriert ist, wobei das Fahrwerk zumindest eine Abstützreinrichtung aufweist, die zur Übertragung einer Betriebsradlast der Arbeitsmaschine auf den Boden vorgesehen ist, wobei an der Rahmenkonstruktion an der Heckseite, vorzugsweise in Fahrtrichtung hinter dem Fahrwerk, die Kupplungseinrichtung angeordnet ist, an welcher die Arbeitsmaschine mit der Bodenbearbeitungs- und/oder Ausbringeinrichtung aufgenommen ist.

Das Arbeitsgerät umfasst bevorzugt eine Rahmenkonstruktion. An einer Frontseite weist die Rahmenkonstruktion eine Zugvorrichtung auf, welche in Form einer Zugöse ausgebildet sein kann. Die Zugvorrichtung ist zur Aufnahme einer Betriebszugkraft einer Zugmaschine in einer Fahrtrichtung und/oder zur Übertragung einer Betriebsstützlast des Maschinenverbunds vorgesehen. Das Arbeitsgerät kann einen Vorratsbehälter aufweisen. Bevorzugt ist der Vorratsbehälter zum Mitführen und Bereitstellen von landwirtschaftlichen Verteilgut für die Bodenbearbeitungs- und/oder Ausbringeinrichtung bzw. die Bodenbearbeitungseinheiten und/oder Ausbringeinheiten eingerichtet.

Zum Mitführen und Bereitstellen eines landwirtschaftlichen Verteilguts, welches auf der landwirtschaftlichen Fläche ausgebracht werden kann, umfasst das Arbeitsgerät einen an der Rahmenkonstruktion befestigten Vorratsbehälter.

An einer Heckseite des Arbeitsgeräts ist ein Fahrwerk vorgesehen, wobei das Fahrwerk zumindest eine Abstützeinrichtung aufweist. Die zumindest eine Abstützeinrichtung ist eingerichtet zur Übertragung einer Betriebsachslast auf den Boden bzw. die Fläche.

Die Abstützeinrichtungen sind in der Betriebsstellung vorzugsweise über die gesamte Arbeitsbreite der Arbeitsmaschine in gleichmäßigen Abständen Bodenbearbeitungs- und Ausbringeinheiten der Bodenbearbeitungs- und/oder Ausbringeinrichtung in Fahrtrichtung vorgelagert. Zudem sind diese neben der Übertragung einer Betriebsradlast, insbesondere zur optimierten Gewichtsverteilung und Rückverfestigung eines zuvor gelockerten Bodens einer Ackerfläche vorgesehen. In der Transportstellung sind lediglich ein Anteil der Abstützeinrichtungen, beispielsweise vier Abstützeinrichtungen, in Bodenkontakt und bilden entsprechend das Fahrwerk.

An der Rahmenkonstruktion können Abstützeinrichtungen mittels einem Klapprahmen mit zugehöriger Stelleinrichtung zwischen der Transportstellung und der Betriebsstellung wechseln. Der Klapprahmen ist gegenüber der Rahmenkonstruktion bevorzugt unabhängig von der Arbeitsmaschine in die Transportstellung und die Betriebsstellung bringbar, bevorzugt durch eine entsprechende Steuerung, beispielsweise durch eine Steuereinrichtung. Hierdurch kann eine verbesserte Abstützung bei einer Änderung der Stellung der Arbeitsmaschine erreicht werden, da das Fahrwerk beim Wechseln in die Betriebsstellung der Arbeitsmaschine bereits über die ganze Arbeitsbreite vorliegt, und beim Wechseln in die Transportstellung der Arbeitsmaschine weiter über die ganze Arbeitsbreite vorliegt, so dass Bewegungen des Maschinenverbundes durch die Bewegungen der Arbeitsmaschine besser entgegengewirkt werden können.

Bei dem Zugfahrzeug kann es sich um einen Traktor, eine selbstfahrende Maschine und/oder dergleichen handeln. Das Zugfahrzeug kann ebenso die Kupplungseinrichtung umfassen, beispielsweise gebildet durch das Hubwerk, auch als Dreipunkt-Kraftheber bekannt, sein.

Die Arbeitsmaschine kann bevorzugt direkt mit dem Zugfahrzeug oder direkt mit dem Arbeitsgerät mittels der Kupplungseinrichtung gekoppelt sein. Ein Maschinenverbund kann beispielhaft durch ein Zugfahrzeug, ein an das Zugfahrzeug gekoppeltes Arbeitsgerät und eine an dem Arbeitsgerät mittels der Kupplungseinrichtung aufgenommene Arbeitsmaschine gebildet sein. Alternativ kann ein Maschinenverbund durch ein Arbeitsgerät und eine an dem Arbeitsgerät mittels der Kupplungseinrichtung aufgenommene Arbeitsmaschine gebildet sein.

Zur Veränderung einer Höhenlage und/oder einer Winkellage der Arbeitsmaschine mit der Bodenbearbeitungs- und/oder Ausbringeinrichtung relativ zur Rahmenkonstruktion und dementsprechend zum Boden ist der Kupplungseinrichtung eine, vorzugsweise mittels einer Steuereinrichtung steuer- und/oder regelbare, Aktoreinrichtung zugeordnet. Die Aktoreinrichtung ist durch zumindest einen, bevorzugt durch zwei, insbesondere hydraulisch betätigte, Unterlenkerzylinder gebildet, wobei die Unterlenkerzylinder jeweils mit einer, einen Unterlenker bildenden Schwinge gekoppelt sind. Alternativ oder ergänzend könnte die Aktoreinrichtung auch durch zumindest einen hydraulisch betätigten Oberlenkerzylinder gebildet sein.

Zur Aufnahme durch die Kupplungseinrichtung weist die Arbeitsmaschine den Trägerrahmen auf. Der Trägerrahmen umfasst das Mittelrahmenteil und zwei gegenüber dem Mittelrahmenteil um die horizontale Drehachsen schwenkbare Seitenrahmenteile. Zum Verschwenken der Seitenrahmenteile ist jeweils eine, vorzugsweise mittels einer Steuereinrichtung steuer- und/oder regelbare, Stelleinrichtung vorgesehen.

Die Betriebszugkraft ist bevorzugt durch eine Zugkraft definiert, die eine Zugmaschine zur Bewegung des Arbeitsgeräts oder der Arbeitsmaschine auf diese überträgt.

Durch die Stützradeinrichtung kann die anteilige Übertragung des Gesamtgewichts des Maschinenverbunds auf den Boden beeinflusst werden.

Gemäß einer bevorzugten Ausführungsform kann vorgesehen sein, dass der Kupplungseinrichtung eine, vorzugsweise mittels einer Steuereinrichtung steuer- und/oder regelbare, Aktoreinrichtung zugeordnet ist, wobei die Aktoreinrichtung zur Veränderung der Höhenlage und/oder der Winkellage der Arbeitsmaschine mit der Bodenbearbeitungs- und/oder Ausbringeinrichtung relativ zur Rahmenkonstruktion konfiguriert ist.

Die Kupplungseinrichtung kann vorzugsweise als eine Dreipunktanhängung und/oder als eine Vierpunktanhängung (z.B. Parallelogramm) ausgebildet sein. Zudem kann die Aktoreinrichtung durch zumindest einen, insbesondere hydraulisch mittels einer Steuereinrichtung betätigten, Oberlenkerzylinder gebildet sein und/oder durch zumindest einen (insbesondere jedoch zwei), insbesondere hydraulisch mittels einer Steuereinrichtung betätigten Unterlenkerzylinder gebildet sein. Bei einer Dreipunktanhängung kann der Oberlenkerzylinder bspw. einen Oberlenker bilden, zudem kann der Unterlenkerzylinder mit zumindest einer, einen Unterlenker bildenden Schwinge gekoppelt sein und/oder diese bilden. Bei einer Vierpunktanhängung kann der Oberlenker bspw. mit den oberen Schwingen eines Parallelogramms gekoppelt sein oder diese bilden. Zudem kann der Unterlenkerzylinder bspw. mit den unteren Schwingen eines Parallelogramms gekoppelt sein oder diese bilden.

Bevorzugt kann es vorgesehen sein, dass durch die Stützradanordnung eine Entlastung der Kupplungseinrichtung erfolgt, und/oder eine Reduzierung der Betriebsradlast des Fahrwerks, und/oder eine Erhöhung der Betriebsstützlast des Fahrwerks erfolgt. Die jeweilige Last kann durch die Stützradanordnung gezielt beeinflusst werden, beispielsweise erhöht oder verringert werden.

Gemäß einer bevorzugten Ausführungsform kann es vorgesehen sein, dass der mittlere Bereich in seiner Höhenausdehnung begrenzt ist. Bevorzugt kann es vorgesehen sein, dass die Höhenausdehnung durch das Mittelrahmenteil des Trägerrahmens begrenzt ist. Bevorzugt kann es vorgesehen sein, dass die Stützradeinrichtung unterhalb eines Anlenkpunktes und/oder einer durch den Anlenkpunkt verlaufende Drehachse der zumindest einen Stelleinrichtung des Trägerrahmens, bevorzugt zumindest eines Seitenrahmenteils, angeordnet ist. Bevorzugt kann es vorgesehen sein, dass die Stützradeinrichtung in der Transportstellung und/oder der Betriebsstellung unterhalb des Anlenkpunkts und/oder der durch den Anlenkpunkt verlaufende Drehachse angeordnet ist. Die Stelleinrichtung ist bevorzugt mittels des Anlenkpunkts und/oder der durch den Anlenkpunkt verlaufende Drehachse mit dem Trägerrahmen, insbesondere dem Mittelrahmenteil, verbunden.

Gemäß einer weiteren bevorzugten Ausführungsform kann es vorgesehen sein, dass die Steuereinrichtung eingerichtet ist, die Stelleinrichtung der Koppeleinrichtung und die Aktoreinrichtung in einer aufeinander abgestimmten Weise zu steuern und/oder zu regeln, vorzugsweise derartig, dass die Betriebsradlast des Fahrwerks einen maximal zulässigen Wert nicht überschreitet und/oder dass die Betriebsstützlast einen minimal erforderlichen Wert nicht unterschreitet.

Gemäß einer weiteren bevorzugten Ausführungsform kann es vorgesehen sein, dass die Stützradeinrichtung eine Bremseinrichtung aufweist oder eine Bremseinrichtung zugeordnet ist. Die Bremseinrichtung ist eingerichtet, die Bewegung der Stützradeinrichtung zu verringern und/oder zu blockieren. Insbesondere die Bewegung der Laufradeinrichtung. Bevorzugt kann die Bremseinrichtung eine mechanische, eine hydraulische, eine pneumatische, eine elektrische, eine elektromagnetische und/oder dergleichen ausgestaltete Bremse sein, wobei auch Kombination hiervon denkbar sind. Bevorzugt kann es vorgesehen sein, dass die Steuereinrichtung eingerichtet ist, die Stärke der Bremswirkung, welche von der Bremseinrichtung bereitstellbar ist, zu steuern und/oder zu regeln, bevorzugt basierend auf einem tatsächlichen Bedarf.

Gemäß einer bevorzugten Ausführungsform kann es vorgesehen sein, dass die Trägerplattform eine weitere Bremseinrichtung aufweist. Die Ausführungen der Bremseinrichtung für die Stützradeinrichtung können in analoger Weise auf die weitere Bremseinrichtung übertragen werden.

Bevorzugt können die Bremseinrichtung und die weitere Bremseinrichtung miteinander verschalten sein. Alternativ können die Bremseinrichtungen unabhängig voneinander betätigt werden.

Gemäß einer weiteren bevorzugten Ausführungsform kann es vorgesehen sein, dass ein erstes Anschlagelement und ein zweites Anschlagelement vorgesehen sind, wobei die Anschlagelemente jeweils eingerichtet sind, die Betätigung der Koppeleinrichtung, insbesondere der Stelleinrichtung der Koppeleinrichtung, zu begrenzen. Bevorzugt können die Anschlagelemente als Taster und/oder Schalter ausgebildet sein, welche eingerichtet sind, die Betätigung der Stelleinrichtung zu unterbrechen. Die Steuerung der Kopplungseinrichtung ist dementsprechend positionsabhängig ausgebildet. Beispielsweise können durch die Anschlagelemente Ventile der Verschaltung betätigt, insbesondere geschlossen oder geöffnet werden. Bevorzugt können die Anschlagelement an dem Trägerrahmen angeordnet sein, insbesondere zwischen dem Mittelrahmenteil und den Seitenrahmenteilen. Ein Anschlagelement kann derart angeordnet sein, dass eine Betätigung des Anschlagelements im Wesentlichen einem Erreichen der Transportstellung entspricht. Ein Anschlagelement kann derart angeordnet sein, dass eine Betätigung des Anschlagelements im Wesentlichen einem Erreichen der Betriebsstellung entspricht.

Bevorzugt kann es vorgesehen sein, dass die Kupplungseinrichtung mit dem Trägerrahmen, insbesondere dem Mittelrahmenteil, und insbesondere einer Aufnahme, bspw. Dreipunkt-Aufnahme, derart gekoppelt ist, dass eine Pendelbewegung der Arbeitsmaschine um eine Achse parallel zu der Fahrtrichtung möglich ist. Bevorzugt können die Unterlenker der Kupplungseinrichtung mit jeweils einem Bewegungselement verbunden sein. Das Bewegungselement ist eingerichtet, gegenüber dem Mittelrahmenteil drehbar zu sein, insbesondere zwischen zwei Anschlägen, welche eingerichtet sind, die Bewegung des Bewegungselements zu begrenzen.

Bevorzugt ist die Betriebsstellung der Arbeitsmaschine gleichbedeutend mit einer Betriebsstellung des landwirtschaftlichen Maschinenverbundes. Bevorzugt ist die Transportstellung der Arbeitsmaschine gleichbedeutend mit einer Transportstellung des landwirtschaftlichen Maschinenverbundes.

Die Steuereinrichtung weist bspw. eine Rechnereinheit, einen Bordcomputer und/oder dergl. auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Im Kontext der Erfindung umfasst der Begriff der Steuereinrichtung, insbesondere die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren oder Sensoreinheiten oder Sensoranordnungen integrierte Steuereinrichtungen. Ebenso sei darauf hingewiesen, dass die Signale und/oder Daten der Sensoren / Messeinrichtungen / Erfassungseinrichtungen und/oder dergl. jeweils als Rückkoppelung für eine Steuer- und/oder Regelgröße herangezogen werden können.

Es sei noch darauf hingewiesen, dass die Begriffe "Steuern" und "Regeln" und "Steuereinrichtung" und "Regelungseinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Hinsichtlich der Vorteile und Ausführungsformen des landwirtschaftlichen Maschinenverbunds wird auf die Vorteile und Ausführungsformen der erfindungsgemäßen landwirtschaftlichen Arbeitsmaschine verwiesen.

Zur Vermeidung von Wiederholungen sei darauf hingewiesen, dass die erfindungsgemäßen Ausführungsformen und Merkmale in beliebiger Weise und frei der Arbeitsmaschine und/oder dem Maschinenverbund kombinierbar sind. Dementsprechend sind alle Ausführungsformen und erfindungsgemäßen Merkmale sowohl für die Arbeitsmaschine als auch für den Maschinenverbund offenbart und beanspruchbar.

Im Sinne der Anmeldung können Merkmale, die im Zusammenhang mit anderen Merkmalen offenbart sind, auch als für sich allein gestellt offenbart angesehen werden. Merkmale, die mittels "und/oder" miteinander verbunden sind, sind für sich alleine und in Kombination mit den weiteren Merkmalen als offenbart zu verstehen.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine Arbeitsmaschine und ein Maschinenverbund in einer Transportstellung;
- Figur 2: die Arbeitsmaschine und der Maschinenverbund gemäß Figur 1 in einer Betriebsstellung;
- Figur 3: schematisch die Funktionsweise der Erfindung;
- Figur 4: die Arbeitsmaschine und der Maschinenverbund gemäß Figur 1 in einer Seitenansicht;
- Figur 5: die Arbeitsmaschine und der Maschinenverbund gemäß Figur 2 in einer Seitenansicht;
- Figur 6: die Arbeitsmaschine und der Maschinenverbund gemäß Figur 1 in einer rückwärtigen Ansicht;
- Figur 7: die Arbeitsmaschine und der Maschinenverbund gemäß Figur 2 in einer rückwärtigen Ansicht;
- Figur 8: die Arbeitsmaschine und der Maschinenverbund gemäß Figur 1 in einer Draufsicht;
- Figur 9: die Arbeitsmaschine und der Maschinenverbund gemäß Figur 2 in einer Draufsicht.
- Figur 10: die Arbeitsmaschine in einer perspektivischen Ansicht von vorne;
- Figur 11: die Arbeitsmaschine gemäß Figur 11 in einer perspektivischen Ansicht von hinten;
- Figur 12: die Arbeitsmaschine gemäß Figur 10 in einer Draufsicht;
- Figur 13-15: die Arbeitsmaschine gemäß Figur 10 in einer Seitenansicht, in verschiedenen Positionen.

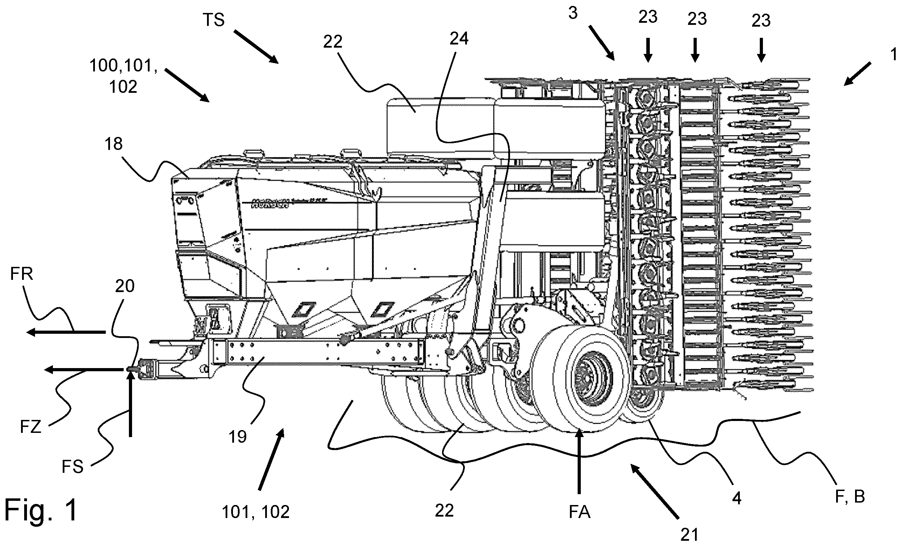

Die in den Figuren 1 bis 15 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

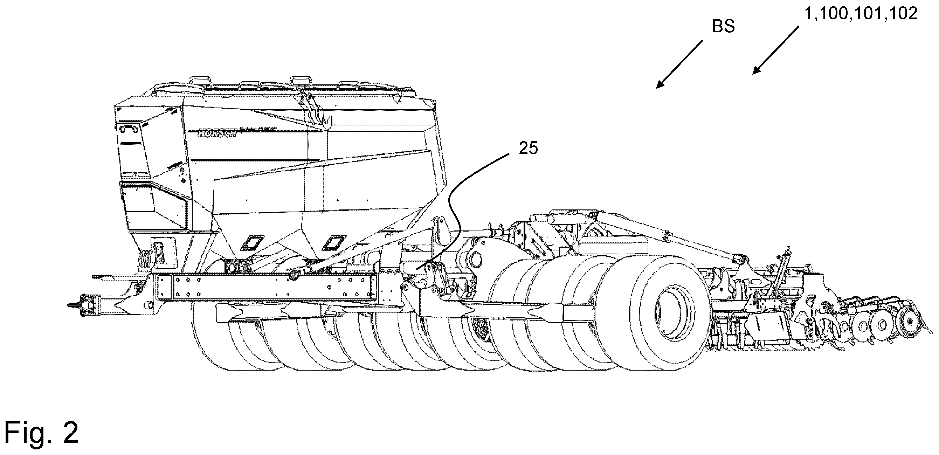

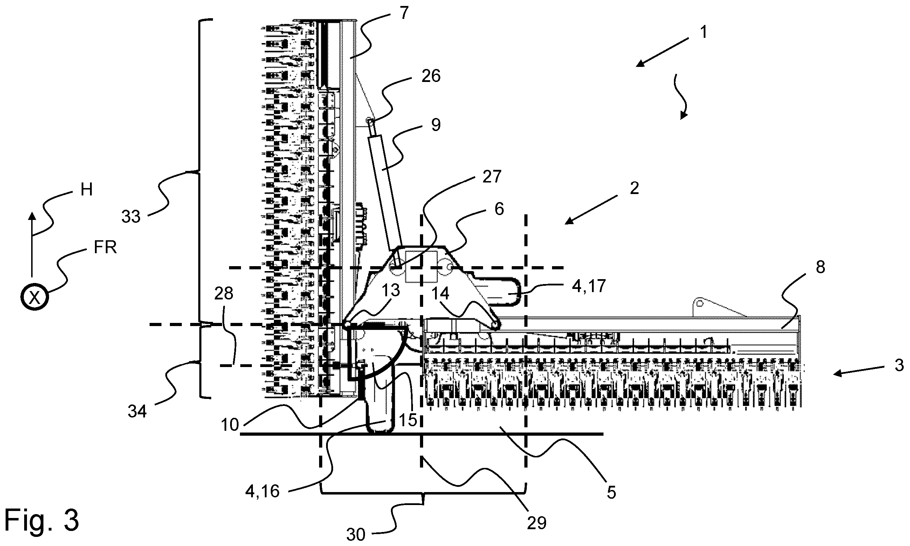

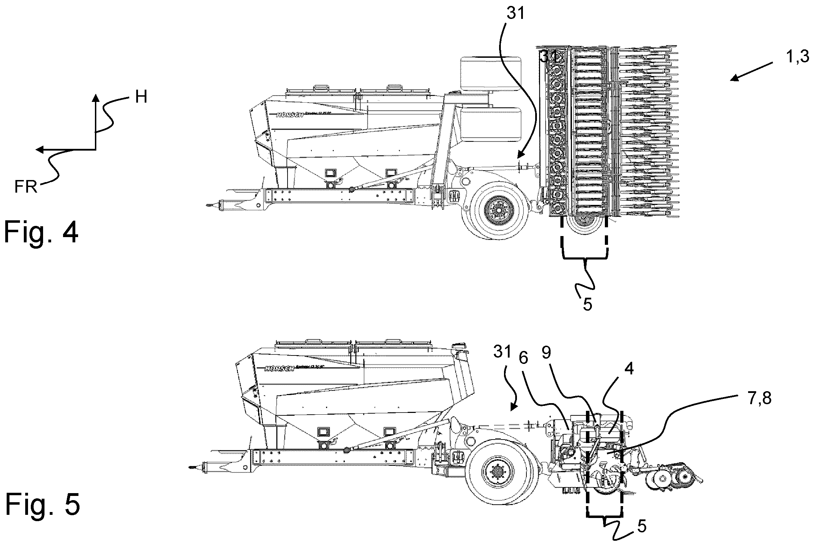

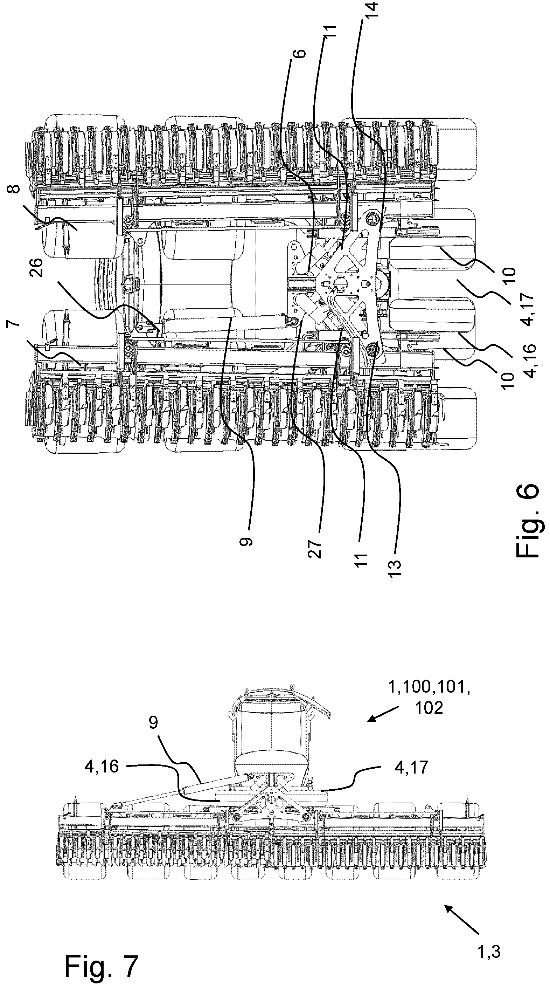

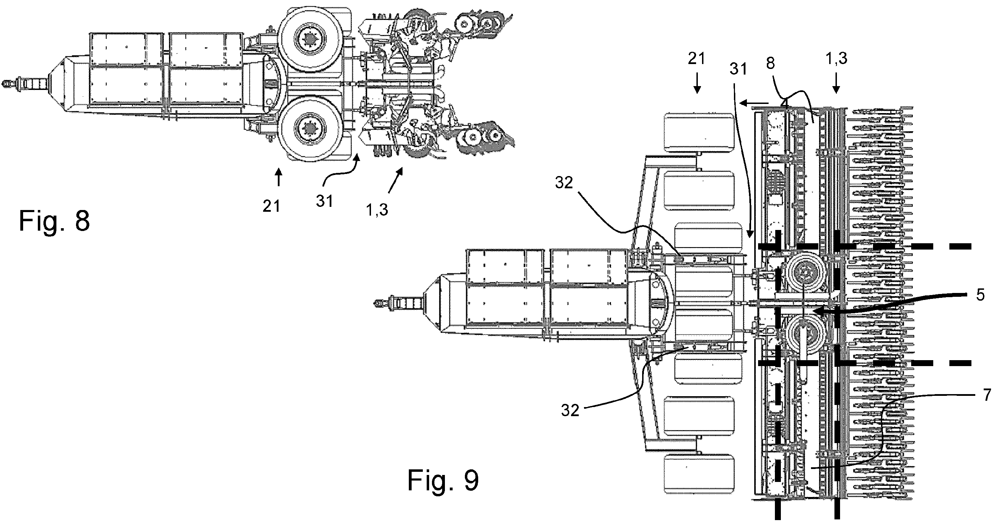

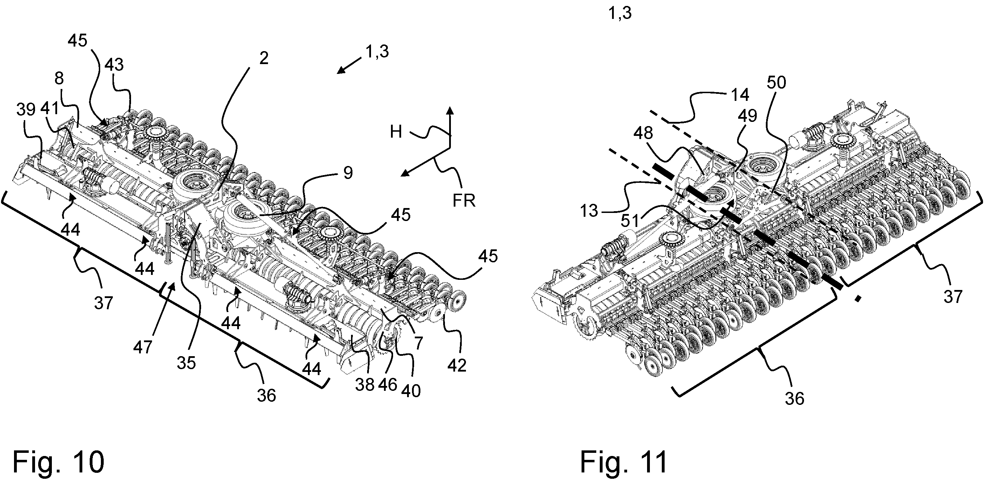

In den Figuren 1 und 2 ist ein landwirtschaftlicher Maschinenverbund 100 bzw. eine landwirtschaftliche Arbeitsmaschine 1 jeweils in einer perspektivischen Ansicht dargestellt, wobei sich die Arbeitsmaschine 1 in Figur 1 in einer Transportstellung TS und in der Figur 2 in einer Betriebsstellung BS befindet. In der Figur 3 ist das Konzept der vorliegenden Erfindung schematisch und beispielhaft dargestellt und anhand dieser Figur 3 im späteren Verlauf erläutert. In den Figuren 4 und 5 ist der landwirtschaftlicher Maschinenverbund 100 bzw. die landwirtschaftliche Arbeitsmaschine 1 jeweils in einer Seitenansicht dargestellt, wobei sich die Arbeitsmaschine 1 in Figur 5 in der Transportstellung TS und in der Figur 6 in der Betriebsstellung BS befindet. In den Figuren 6 und 7 ist der landwirtschaftlicher Maschinenverbund 100 bzw. die landwirtschaftliche Arbeitsmaschine 1 jeweils in einer Hinteransicht dargestellt, wobei sich die Arbeitsmaschine 1 in Figur 6 in der Transportstellung TS und in der Figur 7 in der Betriebsstellung BS befindet. In den Figuren 8 und 9 ist der landwirtschaftlicher Maschinenverbund 100 bzw. die landwirtschaftliche Arbeitsmaschine 1 jeweils in einer Draufsicht dargestellt, wobei sich die Arbeitsmaschine 1 in Figur 8 in der Transportstellung TS und in der Figur 9 in der Betriebsstellung BS befindet. In den Figuren 10 bis 15 ist die Arbeitsmaschine nochmals detaillierter dargestellt.

Der in den Figuren dargestellte Arbeitsmaschine 1 und der Maschinenverbund 100 mit der Arbeitsmaschine 1 und einer landwirtschaftlichen Trägerplattform 101, hier als ein Arbeitsgerät 102 dargestellt, sind zumindest ähnlich zueinander ausgebildet. Erläuterungen können an anderer Stelle der Beschreibung getätigt sein.

Das Arbeitsgerät 102 umfasst bevorzugt eine Rahmenkonstruktion 19. An einer Frontseite weist die Rahmenkonstruktion 19 eine Zugvorrichtung 20 auf, welche in Form einer Zugöse ausgebildet sein kann. Die Zugvorrichtung 20 ist zur Aufnahme einer Betriebszukraft FZ einer nicht dargestellten Zugmaschine in einer Fahrtrichtung FR und/oder zur Übertragung einer Betriebsstützlast FS des Maschinenverbunds 100 vorgesehen. Das Arbeitsgerät 102 weist einen Vorratsbehälter 18 auf.

Zum Mitführen und Bereitstellen eines landwirtschaftlichen Verteilguts, welches mittels einer Bodenbearbeitungs- und/oder Ausbringeinrichtung 3 auf der landwirtschaftlichen Fläche F ausgebracht werden kann, umfasst das Arbeitsgerät 102 einen an der Rahmenkonstruktion befestigten Vorratsbehälter 18.

An einer Heckseite des Arbeitsgeräts 102 ist ein Fahrwerk 21 vorgesehen, wobei das Fahrwerk 21 zumindest eine Abstützeinrichtung 22 aufweist. Die zumindest eine Abstützeinrichtung 22 ist eingerichtet zur Übertragung einer Betriebsachslast FA auf den Boden B bzw. die Fläche F.

Die Abstützeinrichtungen 22 sind in der Betriebsstellung BS vorzugsweise über die gesamte Arbeitsbreite der Arbeitsmaschine 1 in gleichmäßigen Abständen Bodenbearbeitungs- und Ausbringeinheiten 23 der Bodenbearbeitungs- und/oder Ausbringeinrichtung 3 in Fahrtrichtung FR vorgelagert. Zudem sind diese neben der Übertragung einer Betriebsradlast FA, insbesondere zur optimierten Gewichtsverteilung und Rückverfestigung eines zuvor gelockerten Bodens B einer Ackerfläche F vorgesehen. In der Transportstellung TS sind lediglich ein Anteil der Abstützeinrichtungen 22, vorliegend vier Abstützeinrichtungen 22, in Bodenkontakt und bilden entsprechend das Fahrwerk 21.

An der Rahmenkonstruktion 19 können Abstützeinrichtungen 22 mittels einem Klapprahmen 24 mit zugehöriger Stelleinrichtung 25 zwischen der Transportstellung TS und der Betriebsstellung BS wechseln. Der Klapprahmen 24 ist gegenüber der Rahmenkonstruktion 19 bevorzugt unabhängig von der Arbeitsmaschine 1 in die Transportstellung und die Betriebsstellung bringbar, bevorzugt durch eine entsprechende Steuerung, beispielsweise durch eine Steuereinrichtung. Hierdurch kann eine verbesserte Abstützung bei einer Änderung der Stellung der Arbeitsmaschine 1 erreicht werden, da das Fahrwerk beim Wechseln in die Betriebsstellung BS der Arbeitsmaschine 1 bereits über die ganze Arbeitsbreite vorliegt, und beim Wechseln in die Transportstellung TS der Arbeitsmaschine weiter über die ganze Arbeitsbreite vorliegt, so dass Bewegungen des Maschinenverbundes 100 durch die Bewegungen der Arbeitsmaschine 1 besser entgegengewirkt werden können.

In der Figur 3 ist die Arbeitsmaschine 1 schematisch gemäß einer Ausführungsform dargestellt. Die Arbeitsmaschine 1 umfasst den Trägerrahmen 2, an welchem die Bodenbearbeitungs- und/oder Ausbringeinrichtung 3 befestigt ist. Bevorzugt weist der Trägerrahmen ein Mittelrahmenteil 6 und ein erstes Seitenrahmenteil 7 und ein zweites Seitenrahmenteil 8 auf, wobei das erste Seitenrahmenteil 7 um eine erste Drehachse 13 und das zweite Seitenrahmenteil 8 um eine zweite Drehachse 14 gegenüber dem Mittelrahmenteil drehbar gelagert sind. Das erste Seitenrahmenteil 7 ist in der Transportstellung TS und das zweite Seitenrahmenteil 8 ist in der Betriebsstellung BS dargestellt.

Die Stützradeinrichtung 4 weist eine erste Stützradeinheit 16 und eine zweite Stützradeinheit 17 auf. Die Stützradeinrichtung 4 ist mit dem Trägerrahmen 2 gekoppelt. Genauer ist die erste Stützradeinheit 16 mittels einer Koppeleinrichtung 10 mit dem ersten Seitenrahmenteil 7 und die zweite Stützradeinheit mittels einer Koppeleinrichtung 10 mit dem zweiten Seitenrahmenteil 8 gekoppelt. Es ist lediglich eine Koppeleinrichtung 10 erkennbar.

Die Seitenrahmenteile 7, 8 sind mittels entsprechender Stelleinrichtungen 9 gegenüber dem Mittelrahmenteil 6 drehbar. Die Stelleinrichtung 9 ist mittels eines ersten Anlenkpunktes 26 mit dem ersten Seitenrahmenteil 7 und mittels eines zweiten Anlenkpunktes 27 drehbar mit dem Mittelrahmenteil 6 verbunden. Gleiches gilt analog für das zweite Seitenrahmenteil 8.

Die Koppeleinrichtung 10 der ersten Stützradeinheit 16 ist drehbar um eine Drehachse 28 mit dem ersten Seitenrahmenteil 7 verbunden, und weist bzw. ist einer Stelleinrichtung (hier nicht gezeigt) zugeordnet, mittels welcher die Stützradeinheit 16 um die Drehachse 28 gedreht werden kann. Gleiches gilt analog für die Koppeleinrichtung 10 der zweiten Stützradeinheit 17.

Durch die Koppeleinrichtung 10 ist die Stützradeinrichtung 4 durch Bewegungen des Trägerrahmens 2 zwangsgeführt. Ein Schwenkbereich 15 der Stützradeinrichtung 4 ist beispielhaft eingezeichnet.

Die Drehachsen 13, 14 verlaufen bevorzugt in Fahrtrichtung FR, so dass das jeweilige Seitenrahmenteil um eine Drehachse 13, 14 parallel zur Fahrtrichtung FR gedreht werden und dementsprechend die Stützradeinrichtung 4, bevorzugt die Stützradeinheiten 16, 17, um diese verschwenkt werden.

Weiter ist schematisch und lediglich beispielhaft der mittlere Bereich 5 dargestellt, welcher quer zur Fahrtrichtung FR und in Höhenrichtung H begrenzt ist. Die Stützradanordnung 4 ist in der Transportstellung TS als auch in der Betriebsstellung BS in dem mittleren Bereich 5 angeordnet. Die Begrenzung in Höhenrichtung kann durch den zweiten Anlenkpunkt 27 der Stelleinrichtung 9 dargestellt sein. Quer zur Fahrtrichtung FR ist der mittlere Bereich 5 durch einen Bereich 30 um eine Mitte 29 dargestellt. In den nachfolgenden Figuren ist der mittlere Bereich 5 hinsichtlich der Fahrtrichtung FR dargestellt.

Der mittlere Bereich 5 kann als eine Fläche oder als ein Volumen verstanden werden, in welchem sich die Stützradanordnung 5 befindet bzw. darin angeordnet ist. Bevorzugt gilt dies auch während eines Wechsels zwischen der Transportstellung TS und der Betriebsstellung BS.

Weiter bevorzugt ist das jeweilige Seitenrahmenteil 7, 8 durch die zugehörige Drehachse 13, 14 in einen ersten Hebel 33 und einen zweiten Hebel 34 unterteilt. Der erste Hebel 33 ist bevorzugt länger als der zweite Hebel 34. Bevorzugt ist die Stützradeinrichtung 4, bevorzugter die Stützradeinheiten 16, 17, an dem zweiten Hebel 34 angeordnet. Der erste Hebel 33 dreht von der Transportstellung TS in die Betriebsstellung entgegen des Uhrzeigersinns, gesehen entlang der Fahrtrichtung FR, und der zweite Hebel 34 ebenso. Der erste Hebel 34 ist in der Transportstellung TS oberhalb der Drehachse 13, 14 und in der Betriebsstellung BS weiter außenliegend hinsichtlich der Drehachse 13, 14. Der zweite Hebel 34 ist in der Transportstellung TS unterhalb der Drehachse 13, 14 und in der Betriebsstellung BS weiter innenliegend hinsichtlich der Drehachse 13, 14.

In den Figuren 4 und 5 ist der mittlere Bereich 5 näher dargestellt. Bevorzugt kann es sich um einen Bereich um den Trägerrahmen 2, insbesondere die Seitenrahmenteile 7, 8 handeln.

Weiter ist eine Kupplungseinrichtung 31 dargestellt.

Zur Aufnahme, das heißt zur Koppelung, der Arbeitsmaschine 1 mit der Bodenbearbeitungs- und/oder Ausbringeinrichtung 3 an der Rahmenkonstruktion 19 ist an, bevorzugt der Heckseite, der Rahmenkonstruktion 19, vorzugsweise in Fahrtrichtung FR hinter dem Fahrwerk 21, die Kupplungseinrichtung 31 angeordnet. Die Kupplungseinrichtung 31 ist vorliegend als eine Dreipunktanhängung ausgebildet und umfasst einen oberen Koppelpunkt, welcher durch einen Oberlenker gebildet ist, und zwei untere Schwingen. Alternativ zu einer Dreipunktanhängung könnte die Kupplungseinrichtung 31 auch durch eine Vierpunktanhängung, bspw. in Form eines Parallelogramms gebildet sein.

Zur Veränderung einer Höhenlage und/oder einer Winkellage der Arbeitsmaschine 1 mit der Bodenbearbeitungs- und/oder Ausbringeinrichtung 3 relativ zur Rahmenkonstruktion 19 und dementsprechend zum Boden B ist der Kupplungseinrichtung 31 eine, vorzugsweise mittels einer Steuereinrichtung steuer- und/oder regelbare, Aktoreinrichtung 32 zugeordnet (gezeigt in Figur 9). Die Aktoreinrichtung 32 ist zweckmäßig durch zumindest einen, gemäß dem Ausführungsbeispiel durch zwei, insbesondere hydraulisch betätigte, Unterlenkerzylinder gebildet, wobei die Unterlenkerzylinder jeweils mit einer, einen Unterlenker bildenden Schwinge gekoppelt sind. Alternativ oder ergänzend könnte die Aktoreinrichtung 32 auch durch zumindest einen hydraulisch betätigten Oberlenkerzylinder gebildet sein.

Zur Aufnahme durch die Kupplungseinrichtung 31 weist die Arbeitsmaschine 1 den Trägerrahmen 2 auf. Der Trägerrahmen 2 umfasst das Mittelrahmenteil 6 und zwei gegenüber dem Mittelrahmenteil 6 um die horizontale Längsachsen 13, 14 schwenkbare Seitenrahmenteile 7, 8. Zum Verschwenken der Seitenrahmenteile 7, 8 ist jeweils eine, vorzugsweise mittels einer Steuereinrichtung steuer- und/oder regelbare, Stelleinrichtung 9 vorgesehen.

Gemäß dem Ausführungsbeispiel sind die Bodenbearbeitungs- und/oder Ausbringeinrichtung 3 jeweils an den Seitenrahmenteilen 7, 8 gelagert. Die Stelleinrichtung 9 umfasst gemäß dem Ausführungsbeispiel an der linken und der rechten Seite des Mittelrahmenteils 6 jeweils zwei zwischen dem Mittelrahmenteil 6 und je einem Seitenrahmenteil 7, 8 angeordneten, insbesondere hydraulisch betätigten, Zylinder.

Bevorzugt ist die Stützradeinrichtung 4 derart mit dem Trägerrahmen 2 gekoppelt, dass in der Transportstellung TS die Stützradeinrichtung 4 unterhalb der Drehachsen 13, 14 und in der Betriebsstellung BS zumindest teilweise oberhalb der Drehachsen 13, 14 angeordnet sind.

Die Figuren 6 und 7 zeigen die Arbeitsmaschine 1 bzw. den Maschinenverbund 100 in einer rückwärtigen Ansicht. In der Figur 6 ist die Stelleinrichtung 11 der Koppeleinrichtung 10 dargestellt.

In den Figuren 8 und 9 ist die Arbeitsmaschine 1 bzw. der Maschinenverbund 100 in einer Draufsicht dargestellt. In der Figur 9 ist die Aktoreinrichtung 32 und der mittlere Bereich 5 nochmals dargestellt.

In den Figuren 10 bis 15 ist die Arbeitsmaschine 1 nochmals eigenständig dargestellt, wobei jedoch die Ausführungen für die Arbeitsmaschine 1 als auch einen landwirtschaftlichen Maschinenverbund 100 mit der Arbeitsmaschine gelten.

In der Figur 10 dargestellt ist perspektivisch von vorne die Arbeitsmaschine 1 mit dem ersten Seitenrahmenteil 7 und dem zweiten Seitenrahmenteil 8. An dem ersten Seitenrahmenteil 7 ist in Fahrtrichtung FR vor dem ersten Seitenrahmenteil 7 eine erste Bodenbearbeitungseinheit 38 mittels mehrerer Kopplungseinrichtungen 44, nach dem ersten Seitenrahmenteil 7 eine erste Ausbringeinheit 42 mittels mehrerer weiterer Kopplungseinrichtungen 45 und auf Höhe des ersten Seitenrahmenteils 7 eine erste weitere Bodenbearbeitungseinheit 40 mittels mehrerer zusätzlicher Kopplungseinrichtungen 46angeordnet.

An dem zweiten Seitenrahmenteil 8 ist in Fahrtrichtung FR vor dem zweiten Seitenrahmenteil 8 eine zweite Bodenbearbeitungseinheit 39 mittels mehrerer Kopplungseinrichtungen 44, nach dem zweiten Seitenrahmenteil 8 eine zweite Ausbringeinheit 43 mittels mehrerer weiterer Kopplungseinrichtungen 45 und auf Höhe des zweiten Seitenrahmenteils 8 eine zweite weitere Bodenbearbeitungseinheit 41 mittels mehrerer zusätzlicher Kopplungseinrichtungen 46 angeordnet.

An dem Trägerrahmen 2 und/oder mit dem Trägerrahmen 2 verbunden ist ein Anbaurahmenteil 35 dargestellt, an welchem eine Dreipunkt-Aufnahme 47 angeordnet ist, wobei die Dreipunkt-Aufnahme 47 eingerichtet ist, mit der Kupplungseinrichtung 31 koppelbar zu sein.

Das erste Seitenrahmenteil 7, die erste Bodenbearbeitungseinheit 38, die erste weitere Bodenbearbeitungseinheit 40 und die erste Ausbringeinheit 42 bilden ein erstes Seitenteil 36 der Arbeitsmaschine 1.

Das zweite Seitenrahmenteil 8, die zweite Bodenbearbeitungseinheit 39, die zweite weitere Bodenbearbeitungseinheit 41 und die zweite Ausbringeinheit 43 bilden ein zweites Seitenteil 37 der Arbeitsmaschine 1.

Die Gesamtheit der Bodenbearbeitungseinheiten 38, 39, 40, 41 und der Ausbringeinheiten 42, 43 können die Bodenbearbeitungs- und/oder Ausbringeinrichtung 3 darstellen.

In der Figur 11 ist die Figur 10 in einer perspektivischen Ansicht von hinten dargestellt. Anhand der Figur 11 wird näher auf das Mittelrahmenteil 6 eingegangen und erläutert.

Das Mittelrahmenteil 6 weist zumindest drei Rahmenabschnitten 48, 49, 50 auf. Das Mittelrahmenteil 6 weist einen ersten Rahmenabschnitt 48, einen zweiten Rahmenabschnitt 49, und einen dritten Rahmenabschnitt 50 auf.

Die Rahmenabschnitte 48, 49, 50 sind in Fahrtrichtung hintereinander angeordnet. Dabei ist der erste Rahmenabschnitt 48 vor dem zweiten Rahmenabschnitt 49 und der zweite Rahmenabschnitt 49 vor dem dritten Rahmenabschnitt 50 angeordnet. Der zweite Rahmenabschnitt 49 ist mit dem ersten Rahmenabschnitt 48 und dem dritten Rahmenabschnitt 50 gekoppelt, hier fest und/oder starr verbunden.

Der erste Rahmenabschnitt 48 erstreckt sich im Wesentlichen quer zur Fahrtrichtung R, und in Höhenrichtung H. Der dritte Rahmenabschnitt 50 erstreckt sich im Wesentlichen quer zur Fahrtrichtung FR, und in der Höhenrichtung H. Der zweite Rahmenabschnitt 49 erstreckt sich im Wesentlichen in Fahrtrichtung FR, und in der Höhenrichtung H.

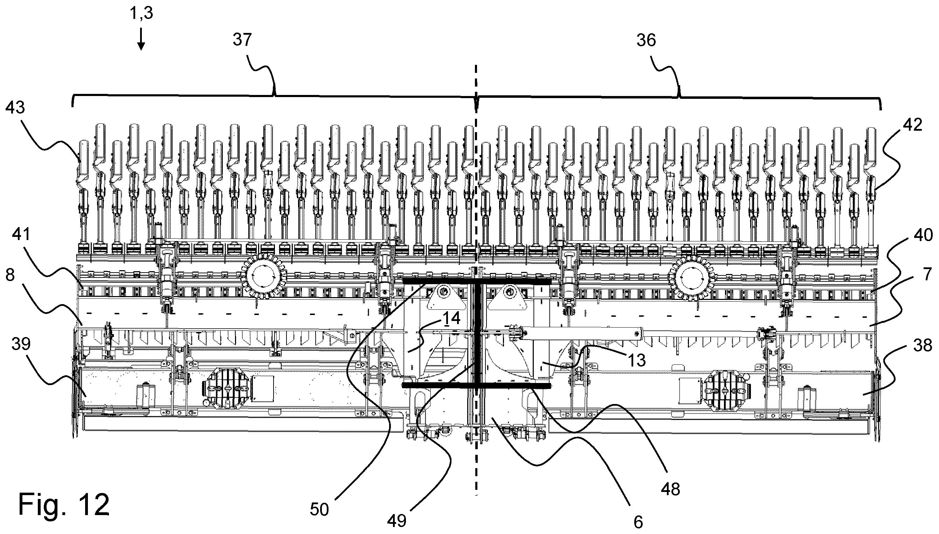

Durch die Anordnung der Rahmenabschnitte 48, 49, 50 zueinander und/oder der Ausgestaltung des Mittelrahmenteils 6 ist ein entsprechender Freiraum 51 geschaffen, welcher bevorzugt durch die Rahmenabschnitte 48, 49, 50 definiert ist. Der Freiraum 51 ist in der Figur 12 nochmals deutlicher dargestellt.

Bevorzugt ist das Mittelrahmenteil 6 entlang der Höhenrichtung H gesehen, H-förmig ausgebildet. Dies ist durch entsprechende dick dargestellte Linien nochmals dargestellt.

Die jeweilige Drehachse 13, 14 der Seitenrahmenteile ist mit dem Mittelrahmenteil 6 verbunden. Bevorzugt ist die jeweilige Drehachse 13, 14 mit dem ersten Rahmenabschnitt 48 und dem dritten Rahmenabschnitt 50 verbunden. Bevorzugt ist die Drehachse 13 des ersten Seitenrahmenteils 7 und die Drehachse 14 des zweiten Seitenrahmenteils 8 auf gegenüberliegenden Seiten des zweiten Rahmenabschnitts 49 angeordnet. Beispielsweise ist die Drehachse 13 des ersten Seitenrahmenteils 7 in Fahrtrichtung FR auf einer linken Seite des zweiten Rahmenabschnitts 49 und die Drehachse 14 des zweiten Seitenrahmenteils 8 auf einer rechten Seite des zweiten Rahmenabschnitts 49 angeordnet.

Bevorzugt ist zumindest eine Stelleinrichtung 9 der Seitenrahmenteile 7, 8 mit dem Trägerrahmen 2 drehbar gekoppelt, insbesondere mit dem Mittelrahmenteil 6 und bevorzugter mit dem zweiten Rahmenabschnitt 49 des Mittelrahmenteils 6. Bevorzugt ist der Anlenkpunkt 27 vorgesehen, mittels welchem die Stelleinrichtung 9 mit dem Trägerrahmen 2 drehbar gekoppelt ist. Bevorzugt ist die Stelleinrichtung 9 in Fahrtrichtung FR zwischen dem ersten Rahmenabschnitt 48 und dem dritten Rahmenabschnitt 50 angeordnet.

Bevorzugt sind eine erste Stelleinrichtung 9 und eine zweite Stelleinrichtung 9 vorgesehen, wobei die erste Stelleinrichtung 9 mit dem ersten Seitenrahmenteil 7 und die zweite Stelleinrichtung 9 mit dem zweiten Seitenrahmenteil 8 gekoppelt ist. Es ist lediglich die erste Stelleinrichtung 9 in den Figuren dargestellt.

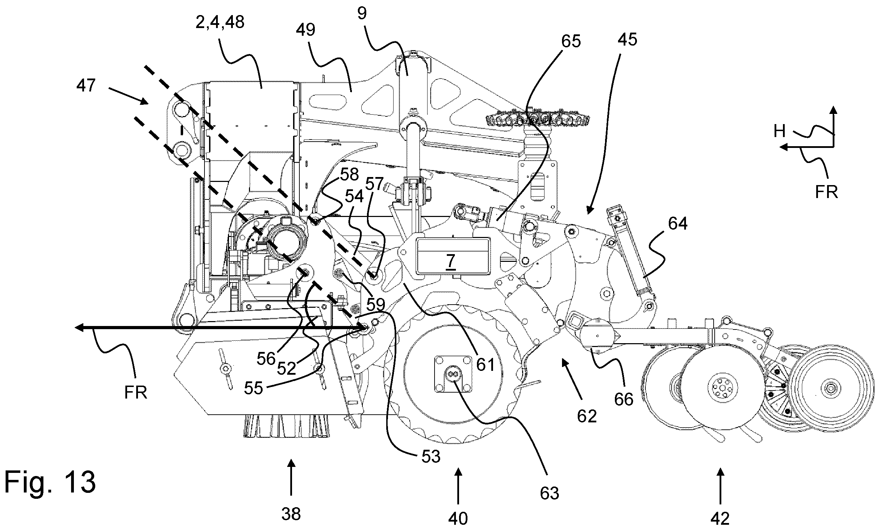

In den Figuren 13 bis 15 ist die Arbeitsmaschine 1 in verschiedenen Positionen dargestellt, wobei sich die verschiedenen Positionen auf die mittels der Kopplungseinrichtung 44 und der weiteren Kopplungseinrichtung 45 einnehmbaren Positionen gegenüber dem Seitenrahmenteil 7 beziehen.

Sowohl die Kopplungseinrichtung 44 als auch die weitere Kopplungseinrichtung 45 sind als Parallelogramm-Anordnungen ausgeführt.

Die Kopplungseinrichtung(en) 44 umfasst zumindest ein erstes Hebelelement 53 und zumindest ein zweites Hebelelement 54, wobei das erste Hebelelement 53 mittels einer ersten unteren Drehachse 55 mit dem Seitenrahmenteil 7 und mittels einer zweiten unteren Drehachse 56 mit der Bodenbearbeitungseinheit 38 verbunden ist. Das zweite Hebelelement 54 ist mittels einer ersten oberen Drehachse 57 mit dem Seitenrahmenteil 7 und mittels einer zweiten oberen Drehachse 58 mit der Bodenbearbeitungseinheit 38 drehbar gekoppelt.

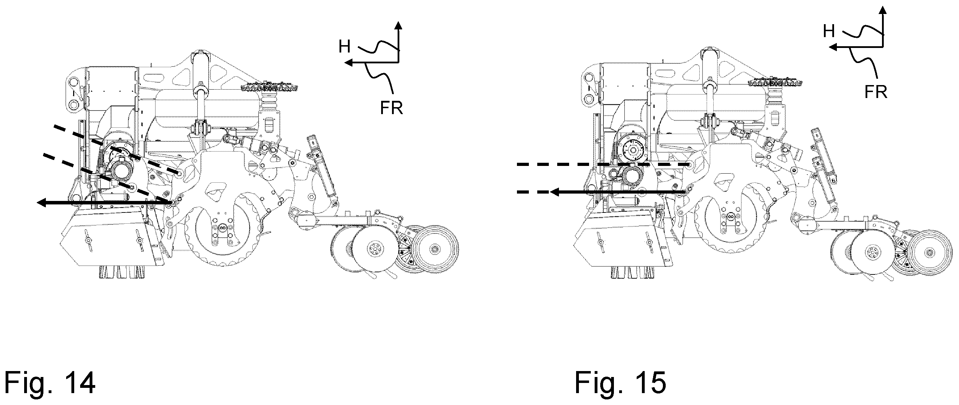

In der Figur 13 ist eine maximale obere Position der Bodenbearbeitungseinheit 38 in Höhenrichtung dargestellt, in der Figur 15 eine maximale untere Position und in der Figur 14 eine Zwischenposition zwischen der maximalen oberen Position und der maximalen unteren Position.

Eine erste Verbindungslinie, welche die oberen Drehachsen verbindet, und eine zweite Verbindungslinie, welche die unteren Drehachsen verbindet, sind durch die Parallelogramm-Anordnung parallel zueinander ausgerichtet. In der maximalen oberen Position schließen die Verbindungslinien einen Winkel 52 mit der Fahrtrichtung FR ein, wobei bevorzugt der Winkel 52 ein spitzer Winkel ist. Bevorzugter ist der Winkel höchstens 60°, bevorzugter höchstens 50°, bevorzugter höchstens 45°.

In der maximalen unteren Position sin die Verbindungslinien im Wesentlichen parallel zu der Fahrtrichtung FR. Hierdurch ergibt sich der Vorteil, dass bei Hindernissen und/oder dergleichen die Bodenbearbeitungseinheit 38 sich lediglich in Höhenrichtung H nach oben bewegen kann, dem Hindernis ausweicht und sich dementsprechend nicht weiter in den Boden B hineingedrückt wird.

Weiter ist eine Stelleinrichtung 59 der Kopplungseinrichtung 44 dargestellt. Die Stelleinrichtung 59 ist eingerichtet, die Bodenbearbeitungseinheit 38 relativ zu dem Seitenrahmenteil 7 in Höhenrichtung H zu verlagern, und/oder eine Vorspannkraft, welche auf die Bodenbearbeitungseinheit 38 wirkt, einzustellen.

Weiter ist eine Stelleinrichtung 64 der weiteren Kopplungseinrichtung 45 dargestellt, mittels welcher eine Vorspannkraft auf die Ausbringeinheit 42 einstellbar ist, durch Drehung der Ausbringeinheit 42 gegenüber einem Balkenrahmen 66, an welchem die Ausbringeinheit 42 drehbar gekoppelt ist.

Darüber hinaus ist eine weitere Stelleinrichtung 65 vorgesehen, welche eingerichtet ist, die Ausbringeinheit 42 relativ zu dem Seitenrahmenteil 7 in Höhenrichtung H zu verlagern.

Eine Drehachse 63 der weiteren Bodenbearbeitungseinheit 40 ist, in Fahrtrichtung FR, auf Höhe des Seitenrahmenteils 7 angeordnet.

Die Kopplungseinrichtung 44 ist mittels einem Abstandselement 61 mit dem Seitenrahmenteil 7 gekoppelt, insbesondere starr gekoppelt. Die weitere Kopplungseinrichtung 45 ist mittels einem Abstandselement 62 mit dem Seitenrahmenteil 7 gekoppelt, insbesondere starr gekoppelt.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste:

- 1: landwirtschaftliche Arbeitsmaschine
- 2: Trägerrahmen
- 3: Bodenbearbeitungs- und/oder Ausbringeinrichtung
- 4: Stützradeinrichtung
- 5: mittlerer Bereich
- 6: Mittelrahmenteil
- 7: erstes Seitenrahmenteil
- 8: zweites Seitenrahmenteil
- 9: Stelleinrichtung
- 10: Koppeleinrichtung
- 11: Stelleinrichtung
- 12: Schwenkachse
- 13: erste Drehachse
- 14: zweite Drehachse
- 15: Schwenkbereich
- 16: erste Stützradeinheit
- 17: zweite Stützradeinheit
- 18: Vorratsbehälter
- 19: Rahmenkonstruktion
- 20: Zugvorrichtung
- 21: Fahrwerk
- 22: Abstützeinrichtung
- 23: Bodenbearbeitungs- und/oder Ausbringeinheiten
- 24: Klapprahmen
- 25: Stelleinrichtung
- 26: erster Anlenkpunkt
- 27: zweiter Anlenkpunkt
- 28: Drehachse
- 29: Mitte
- 30: Bereich
- 31: Kupplungseinrichtung
- 32: Aktoreinrichtung
- 33: erster Hebel
- 34: zweiter Hebel
- 35: Anbaurahmenteil
- 36: erstes Seitenteil
- 37: zweites Seitenteil
- 38: erste Bodenbearbeitungseinheit
- 39: zweite Bodenbearbeitungseinheit
- 40: erste weitere Bodenbearbeitungseinheit
- 41: zweite weitere Bodenbearbeitungseinheit
- 42: erste Ausbringeinheit
- 43: zweite Ausbringeinheit
- 44: Kopplungseinrichtung
- 45: weitere Kopplungseinrichtung
- 46: zusätzliche Kopplungseinrichtung
- 47: Dreipunkt-Aufnahme
- 48: erster Rahmenabschnitt
- 49: zweiter Rahmenabschnitt
- 50: dritter Rahmenabschnitt
- 51: Freiraum
- 52: Winkel
- 53: erstes Hebelelement
- 54: zweites Hebelelement
- 55: erste untere Drehachse
- 56: zweite untere Drehachse
- 57: erste obere Drehachse
- 58: zweite obere Drehachse
- 59: Stelleinrichtung der Kopplungseinrichtung
- 60: Stelleinrichtung der weiteren Kopplungseinrichtung
- 61: Abstandselement
- 62: Abstandselement
- 63: Drehachse
- 64: Stelleinrichtung der weiteren Kopplungseinrichtung
- 65: weitere Stelleinrichtung
- 66: Balkenrahmen
- 100: landwirtschaftlicher Maschinenverbund
- 101: landwirtschaftliche Trägerplattform
- 102: Arbeitsgerät
- F: landwirtschaftliche Fläche
- FR: Fahrtrichtung
- TS: Transportstellung
- BS: Betriebsstellung
- H: Höhenrichtung

## Patentansprüche

1. Landwirtschaftliche Arbeitsmaschine (1) zur Bodenbearbeitung einer landwirtschaftlichen Fläche (F, B) und/oder zur Ausbringung von landwirtschaftlichem Verteilgut auf der landwirtschaftlichen Fläche (F, B), wobei die Arbeitsmaschine (1) einen Trägerrahmen (2) umfasst,
**gekennzeichnet durch**
eine Stützradeinrichtung (4), welche in einer Transportstellung (TS) und in einer Betriebsstellung (BS) der Arbeitsmaschine (1), in einer Fahrtrichtung (FR) und/oder quer zu der Fahrtrichtung (FR), in einem mittleren Bereich (5) der Arbeitsmaschine (1) angeordnet ist.

2. Landwirtschaftliche Arbeitsmaschine (1) nach Anspruch 1, **dadurch gekennzeichnet, dass** die Stützradeinrichtung (4) mit dem Trägerrahmen (2) gekoppelt ist, wodurch bei einer Klappbewegung des Trägerrahmens (2) die Stützradeinrichtung (4) mit dem Trägerrahmen (2) zwangsgeführt ist.

3. Landwirtschaftliche Arbeitsmaschine (1) nach Anspruch 1 oder 2, **dadurch gekennzeichnet, dass** der Trägerrahmen (2) durch ein Mittelrahmenteil (6) und zumindest zwei gegenüber dem Mittelrahmenteil (7, 8) mittels zumindest einer Stelleinrichtung (9) um eine Drehachse (13, 14) drehbare Seitenrahmenteile (7, 8) gebildet ist, wobei bevorzugt die Stützradeinrichtung (4) mit einem der Seitenrahmenteile (7, 8) oder mit den zumindest zwei Seitenrahmenteilen (7, 8) gekoppelt ist.

4. Landwirtschaftliche Arbeitsmaschine (1) nach zumindest einem der Ansprüche 1 bis 3, **dadurch gekennzeichnet, dass** die Stützradeinrichtung (4) eine erste Stützradeinheit (16) und eine zweite Stützradeinheit (17) aufweist, wobei bevorzugt die erste Stützradeinheit (16) mit einem ersten Seitenrahmenteil (7) und die zweite Stützradeinheit (17) mit einem zweiten Seitenrahmenteil (8) des Trägerrahmens (2) gekoppelt ist.

5. Landwirtschaftliche Arbeitsmaschine (1) nach zumindest einem der Ansprüche 2 bis 4, **dadurch gekennzeichnet, dass** die Stützradeinrichtung (4) mittels einer Koppeleinrichtung (10) mit dem Trägerrahmen (2) gekoppelt ist, wobei die Koppeleinrichtung (10) drehbar um eine Drehachse (28) mit dem Trägerrahmen (2) gekoppelt ist.

6. Landwirtschaftliche Arbeitsmaschine (1) nach Anspruch 5, **dadurch gekennzeichnet, dass** die Koppeleinrichtung (10) eingerichtet ist, die Stützradeinrichtung (4) gegenüber dem Trägerrahmen (2) um die Drehachse (28) zu verschwenken, wobei bevorzugt die Koppeleinrichtung (10) eingerichtet ist, in der Transportstellung (TS) eine auf die Stützradeinrichtung (4) wirkende Vorspannkraft vorzugeben, insbesondere zu begrenzen.

7. Landwirtschaftliche Arbeitsmaschine (1) nach zumindest einem der Ansprüche 1 bis 6, **dadurch gekennzeichnet, dass** die Stützradeinrichtung (4) mit einem Boden (B) in der Transportstellung (TS) in Kontakt und in der Betriebsstellung (BS) nicht in Kontakt ist.

8. Landwirtschaftliche Arbeitsmaschine (1) nach zumindest einem der Ansprüche 1 bis 7, **dadurch gekennzeichnet, dass** die Stützradeinrichtung (4) durch ein Schwenken um eine parallel zu einer Fahrtrichtung (FR) ausgerichteten Schwenkachse (13, 14) in die Betriebsstellung (BS) oder die Transportstellung (TS) bringbar ist.

9. Landwirtschaftliche Arbeitsmaschine (1) nach Anspruch 8, **dadurch gekennzeichnet, dass** ein Schwenkbereich (15) der Stützradeinrichtung (4) innerhalb des mittleren Bereichs (5) liegt.

10. Landwirtschaftliche Maschine (1) nach zumindest einem der Ansprüche 4 bis 5 und/oder zumindest einem der Ansprüche 7 bis 8, **dadurch gekennzeichnet, dass** die Schwenkachse (13, 14) der Stützradeinrichtung (4) der Drehachse (13, 14) des Seitenrahmenteils (7, 8) entspricht.

11. Landwirtschaftliche Arbeitsmaschine (1) nach zumindest einem der Ansprüche 3 bis 5, **dadurch gekennzeichnet, dass** die zumindest eine Stelleinrichtung (9) und die Koppeleinrichtung (10) durch eine Verschaltung gekoppelt sind, bevorzugt fluidisch gekoppelt sind, wodurch abhängig von der Betätigung der zumindest einen Stelleinrichtung (9) die Koppeleinrichtung (10) betätigbar ist.

12. Landwirtschaftliche Arbeitsmaschine (1) nach zumindest einem der Ansprüche 1 bis 11, **dadurch gekennzeichnet, dass** eine Begrenzungseinrichtung vorgesehen ist, welche eingerichtet ist, eine auf die Stützradeinrichtung (4) wirkende Vorspannkraft zu begrenzen.

13. Landwirtschaftliche Arbeitsmaschine (1) zumindest nach Anspruch 3, **gekennzeichnet durch** eine erste Bodenbearbeitungseinheit und eine zweite Bodenbearbeitungseinheit, wobei die erste Bodenbearbeitungseinheit mit einem ersten Seitenrahmenteil und die zweite Bodenbearbeitungseinheit mit einem zweiten Seitenrahmenteil gekoppelt ist, wobei die Bodenbearbeitungseinheiten in Fahrtrichtung vor den Seitenrahmenteilen angeordnet sind.

14. Landwirtschaftliche Arbeitsmaschine (1) nach zumindest Anspruch 3 oder 13, **gekennzeichnet durch** eine erste Ausbringeinheit und eine zweite Ausbringeinheit, welche jeweils mit einem der Seitenrahmenteilen gekoppelt ist und in einer Fahrtrichtung hinter den Seitenrahmenteilen angeordnet sind.

15. Landwirtschaftliche Arbeitsmaschine (1) nach zumindest einem der Ansprüche 3 oder 13 bis 14, **gekennzeichnet durch** eine erste weitere Bodenbearbeitungseinheit und eine zweite weitere Bodenbearbeitungseinheit, bevorzugt jeweils eine Packereinheit, welche mit den Seitenrahmenteilen gekoppelt, insbesondere starr gekoppelt, sind und in Fahrtrichtung auf Höhe der Seitenrahmenteile, vor den Seitenrahmenteilen oder hinter den Seitenrahmenteilen angeordnet ist.

16. Landwirtschaftliche Arbeitsmaschine (1) nach zumindest einem der Ansprüche 13 bis 15, **dadurch gekennzeichnet, dass** zumindest eine Kopplungseinrichtung vorgesehen ist, welche eingerichtet ist, die Bodenbearbeitungseinheiten mit den Seitenrahmenteilen zu koppeln und die Bodenbearbeitungseinheiten in ihrer Position gegenüber den Seitenrahmenteilen einzustellen.

17. Landwirtschaftlicher Maschinenverbund (100), **dadurch gekennzeichnet, dass** der Maschinenverbund (100) eine landwirtschaftliche Arbeitsmaschine (1), bevorzugt eine landwirtschaftliche Arbeitsmaschine nach zumindest einem der Ansprüche 1 bis 16, und eine landwirtschaftliche Trägerplattform (101) umfasst.

18. Landwirtschaftlicher Maschinenverbund (100) nach Anspruch 17, **dadurch gekennzeichnet, dass** die landwirtschaftliche Trägerplattform (101) eine Kupplungseinrichtung (31) umfasst, wobei die Kupplungseinrichtung (31) eingerichtet ist, die landwirtschaftliche Arbeitsmaschine (1) aufzunehmen, wobei bevorzugt die Kupplungseinrichtung (31) eine Dreipunktanhängung und/oder eine Vierpunktanhängung ist.

19. Landwirtschaftlicher Maschinenverbund (100) nach zumindest einem der Ansprüche 17 und 18, **dadurch gekennzeichnet, dass** die landwirtschaftliche Trägerplattform (101) ein Zugfahrzeug und/oder ein landwirtschaftliches Arbeitsgerät (102) ist.

20. Landwirtschaftlicher Maschinenverbund (100) nach Anspruch 18, **dadurch gekennzeichnet, dass** die Kupplungseinrichtung (31) eingerichtet ist, einen Anteil der Gewichtskraft der Trägerplattform (101) auf die Arbeitsmaschine (1) zu übertragen.
